# EUROPÄISCHE PATENTSCHRIFT

(11) **EP 1 373 344 B1**
(45) Veröffentlichungstag und Bekanntmachung des Hinweises auf die Patenterteilung: **28.02.2007**
(21) Anmeldenummer: 02729974.2
(22) Anmeldetag: 08.03.2002
(51) Int. Cl.: C08F 283/00, C09D 151/08

(54) **MIT POLYURETHANEN MODIFIZIERTE COPOLYMERISATE, VERFAHREN ZU IHRER HERSTELLUNG UND IHRE VERWENDUNG**
POLYURETHANE-MODIFIED COPOLYMERS, METHOD FOR THEIR PRODUCTION AND THE USE THEREOF
COPOLYMERES MODIFIES AU MOYEN DE POLYURETHANNES, PROCEDE DE PRODUCTION ET UTILISATION DE CES COPOLYMERES

(30) Priorität: 29.03.2001 DE 10115602
(43) Veröffentlichungstag der Anmeldung: 02.01.2004
(73) Patentinhaber: BASF Coatings AG, 48165 Münster (DE)
(72) Erfinder: BREMSER, Wolfgang, 48165 Münster (DE); KRÜGER, Thomas, 97249 Eisingen (DE); LÖCKEN, Wilma, 45721 Haltern (DE); SCHWARTE, Stephan, 48282 Emsdetten (DE); RINK, Heinz-Peter, 48153 Münster (DE)
(86) Internationale Anmeldenummer: PCT/EP2002/002545
(87) Internationale Veröffentlichungsnummer: WO 2002/079288

(56) Entgegenhaltungen:
- EP-A- 0 919 579
- DE-C- 19 736 535

## Beschreibung

Die vorliegende Erfindung betrifft neue mit Polyurethanen modifizierte Copolymerisate. Außerdem betrifft die vorliegende Erfindung ein neues Verfahren zur Herstellung von mit Polyurethanen modifizierten Copolymerisaten. Des weiteren betrifft die vorliegende Erfindung die Verwendung der neuen mit Polyurethanen modifizierten Copolymerisate als Beschichtungsstoffe, Klebstoffe oder Dichtungsmassen oder zur Herstellung von Beschichtungsstoffen, Klebstoffen und Dichtungsmassen.

Mit Polyurethanen modifizierte (Meth)Acrylatcopolymerisate oder Pfropfinischpolymerisate sind bekannt. Üblicherweise werden sie durch die Pfropfinischpolymerisation olefinisch ungesättigter Monomere in der wäßrigen Dispersion eines hydrophilen oder hydrophoben Polyurethans, das in der Polymerkette befindliche, terminale und/oder laterale, olefinisch ungesättigte Gruppen enthält, hergestellt. Gruppen dieser Art können
- über Maleinsäure oder Fumarsäure und/oder ihre Ester in die Polyurethankette,
- über Verbindungen mit zwei isocyanatreaktiven Gruppen und mindestens einer olefinisch ungesättigten Gruppe oder über Verbindungen mit zwei Isocanatgruppen und mindestens einer olefinisch ungesättigten Gruppe lateral zur Polyurethankette,
- über Verbindungen mit einer isocyanatreaktiven Gruppe und mindestens einer olefinisch ungesättigten Gruppe oder über Verbindungen mit einer Isocanatgruppe und mindestens einer olefinisch ungesättigten Gruppe terminal zur Polyurethankette oder über Anhydride alpha,beta-ungesättigter Carbonsäuren
eingebaut werden. Beispielhaft wird hierzu auf die Patentanmeldungen und Patentschriften DE 197 22 862 C 2, DE 196 45 761 A 1, EP 0 401 565 A 1, EP 0 522 420 A 1, EP 0 522 419 A 2, EP 0 755 946 A 1, EP 0 608 021 A 1, EP 0 708 788 A 1 oder EP 0 730 613 A 1 sowie die nicht vorveröffentlichten deutschen Patentanmeldungen DE 199 53 446.2, DE 199 53 445.2 oder DE 199 53 203.6 verwiesen.

Im Rahmen der vorliegenden Erfindung ist unter der Eigenschaft hydrophil die konstitutionelle Eigenschaft eines Moleküls oder einer funktionellen Gruppe zu verstehen, in die wäßrige Phase einzudringen oder. darin zu verbleiben. Demgemäß ist im Rahmen der vorliegenden Erfindung unter der Eigenschaft hydrophob die konstitutionelle Eigenschaft eines Moleküls oder einer funktionellen Gruppe zu verstehen, sich gegenüber Wasser exophil zu verhalten, d. h., sie zeigen die Tendenz, in Wasser nicht einzudringen oder die wäßrige Phase zu verlassen. Ergänzend wird auf Römpp Lexikon Lacke und Druckfarben, Georg Thieme Verlag, Stuttgart, New York, 1998; »Hydrophilie«, »Hydrophobie«, Seiten 294 und 295, mit verwiesen.

Die bekannten Pfropfinischpolymerisate auf Polyurethanbasis werden vor allem für die Herstellung von Wasserbasislacken verwendet. Die bekannten Wasserbasislacke dienen in erster Linie der Herstellung farb- und/oder effektgebender Basislackierungen in Mehrschichtlackierungen nach dem Naß-in-naß-Verfahren, wie sie beispielsweise in den vorstehend aufgeführten Patentschriften und Patentanmeldungen beschrieben werden.

Die Herstellung der bekannten Pfropfmischpolymerisate auf Polyurethanbasis kann indes Probleme bereiten. So werden häufig laterale und/oder terminale Allylgruppen als Pfropfzentren eingebaut. Indes ist die Reaktivität der Allylgruppen vergleichsweise gering. Verwendet man statt dessen die reaktiveren Acrylat- oder Methacrylatgruppen, kann es zum Gelieren der Polyurethane noch vor oder während der Pfropfmischpolymerisation kommen.

Nicht zuletzt kann sich in manchen Fällen der Gehalt der Polyurethane an olefinisch ungesättigten Gruppen als zu niedrig für eine vollständige Pfropfung erweisen, so daß ein großer Teil der aufzupfropfenden Monomere separate Homo- und/oder Copolymerisate neben dem Poylurethan bildet, die die anwendungstechnischen Eigenschaften der Pfropfmischpolymerisate und der hiermit hergestellten Beschichtungsstoffe, Klebstoffe und Dichtungsmassen beeinträchtigen können. Dieser Nachteil ist nicht ohne weiteres durch eine Erhöhung des Doppelbindungsanteils in den zu pfropfenden Polyurethanen zu beheben, weil hierdurch andere wichtige anwendungstechnische Eigenschaften der Polyurethane in Mitleidenschaft gezogen werden.

Ein weiterer wesentlicher Nachteil bei der Herstellung der bekannten Pfropfmischpolymerisate auf Polyurethanbasis ist, daß die für die Herstellung der (Meth)Acrylatcopolymerisate angewandte radikalische Copolymerisation häufig sehr exotherm und schwer zu regeln ist. Für die Reaktionsführung bedeutet dies, daß hohe Konzentrationen an Monomeren und/oder die sogenannte batch-Fahrweise, bei der die gesamte Menge der Monomeren in einem wäßrigen Medium vorgelegt, emulgiert und anschließend auspolymerisiert wird, vermieden werden müssen. Auch die gezielte Einstellung definierter Molekulargewichte, Molekulargewichtsverteilungen und anderer Eigenschaften bereitet häufig Schwierigkeiten. Die gezielte Einstellung eines bestimmten Eigenschaftsprofils der (Meth)Acrylatcopolymerisate ist aber für ihre Verwendung als Bindemittel in ) Beschichtungsstoffen, Klebstoffen und Dichtungsmassen von großer Bedeutung, da hierdurch das anwendungstechnische Eigenschaftsprofil der Beschichtungsstoffen, Klebstoffe und Dichtungsmassen sowie der hieraus hergestellten Beschichtungen, Klebschichten und Dichtungen direkt beeinflußt werden kann.

In der nicht vorveröffentlichten deutschen Patentanmeldung 100 17 653.4 werden Pfropfmischpolymerisate auf Polyurethanbasis beschrieben, die herstellbar sind, indem man in Lösung oder in einer wäßrigen Dispersion mindestens ein, im statistischen Mittel mindestens eine Thiolgruppe aufweisendes, hydrophobes oder hydrophiles Polyurethan mit mindestens einem olefinisch ungesättigten Monomer pfropfmischpolymerisiert.

In der nicht vorveröffentlichten deutschen Patentanmeldung 100 53 890.8 werden Sulfidgruppen enthaltende Polyurethane beschrieben, die der Herstellung von Polymergemischen oder Pfropfmischpolymerisaten dienen. Hierbei wird mindestens auch ein olefinisch ungesättigtes Monomer pfropfmischpolymerisiert.

In beiden Fällen kann Diphenylethylen als Comonomer eingesetzt werden. Allerdings wird dieses Comonomer nicht zur Herstellung eines Polyurethans verwendet, in dessen Gegenwart weitere olefinisch ungesättigte Monomere copolymerisiert werden.

Die Verwendung von (Meth)Acrylatcopolymerisaten, die durch ein- oder mehrstufige radikalische Copolymerisation von
a) mindestens einem olefinisch ungesättigten Monomer und
b) mindestens einem vom olefinisch ungesättigten Monomer (a) verschiedenen olefinisch ungesättigten Monomer der allgemeinen Formel I

   **R¹R²C=CR³R⁴** **(I),**
worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
herstellbar sind, als Bindemittel in Basislacken, insbesondere Wasserbasislacken (vgl. die deutsche Patentanmeldung DE 199 30 665 A 1), Füllern und Steinschlagschutzgrundierungen (vgl. die deutsche Patentanmeldung DE 199 30 067 A 1) und Klarlacken (vgl. die deutsche Patentanmeldung DE 199 30 664 A 1) ist bekannt. Diese bekannten Copolymerisate sind aber nicht mit Polyurethanen modifiziert.

Aufgabe der vorliegenden Erfindung ist es, neue mit Polyurethanen modifizierte Copolymerisate zu finden, die die Nachteile des Standes der Technik nicht mehr länger aufweisen, sondern die sich in einfacher Weise kontrolliert und gezielt in hohen Ausbeuten herstellen lassen, so daß eine gezielte chemische Strukturierung der neuen mit Polyurethanen modifizierten Copolymerisate möglich ist. Die neuen mit Polyurethanen modifizierten Copolymerisate sollen sich für die Herstellung von neuen Beschichtungsstoffen, Klebstoffen und Dichtungsmassen, insbesondere neuen wäßrigen Beschichtungsstoffen, Klebstoffen und Dichtungsmassen, eignen, die auf und in grundierten und ungrundierten Substraten neue Beschichtungen, Klebschichten und Dichtungen mit einem hervorragenden anwendungstechnischen Eigenschaftprofil liefern. Dabei sollen die neuen Beschichtungen eine sehr gute Haftung auf den Substraten, eine besonders glatte, von Störungen freie Oberfläche, einen hervorragenden optischen Gesamteindruck (Appearance), insbesondere was die Farb- und Effektgebung und den Glanz betrifft, eine hohe Chemikalienbeständigkeit, Witterungsstabilität, Säurestabilität, Wasserbeständigkeit und Kratzfestigkeit aufweisen. Die neuen Klebschichten sollen die unterschiedlichsten Substrate auf Dauer haftfest miteinander verbinden und eine hohe chemische und mechanische Stabilität auch bei extremen Temperaturen und/oder Temperaturenschwankungen haben. Desgleichen sollen die neuen Dichtungen die Substrate auf Dauer abdichten, wobei auch sie eine hohe chemische und mechanische Stabilität auch bei extremen Temperaturen und/oder Temperaturschwankungen i. V. m. der Einwirkung aggressiver Chemikalien aufweisen sollen.

Demgemäß wurden die neuen mit Polyurethanen modifizierten Copolymerisate gefunden, die herstellbar sind, indem man mindestens ein olefinisch ungesättigtes Monomer (a) in einem wäßrigen oder nicht wäßrigen Medium, enthaltend das Umseztungsprodukt (A/B) aus
(A) mindestens einem Copolymerisat mit im statistischen Mittel mindestens 0,1 isocyanatreaktiven funktionellen Gruppen im Molekül, herstellbar durch radikalische Copolymerisation von zumindest
   (a) mindestens einem olefinisch ungesättigten Monomer und
   (b) mindestens einem vom olefinisch ungesättigten Monomer (a) verschiedenen olefinisch ungesättigtes Monomer der allgemeinen Formel I

      **R¹R²C=CR³R⁴** **(I),**
   worin die Reste R¹, R², R³ und R⁴ jeweils unabhängig voneinander für Wasserstoffatome oder substituierte oder unsubstituierte Alkyl, Cycloalkyl-, Alkylcycloalkyl-, Cycloalkylalkyl-, Aryl-, Alkylaryl, Cycloalkylaryl- Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
   in einem wäßrigen Medium oder nichtwäßrigen Medium; und
(B) mindestens einem Polyisocyanat;
radikalisch (co)polymerisiert.

Im folgenden werden die neuen mit Polyurethanen modifizierten Copolymerisate als "erfindungsgemäße modifizierte Copolymerisate" bezeichnet.

Außerdem wurde das neue Verfahren zur Herstellung von mit Polyurethane modifizierten Copolymerisaten gefunden, bei dem man
(I) in einem wäßrigen oder nicht wäßrigen Medium mindestens ein Copolymerisat (A) mit im statistischen Mittel mindestens 0,1 isocyanatreaktiven funktionellen Gruppen im Molekül durch radikalische Copolymerisation von zumindest
   (a) mindestens einem olefinisch ungesättigten Monomer und
   (b) mindestens einem vom olefinisch ungesättigten Monomer (a) verschiedenen olefinisch ungesättigten Monomer der allgemeinen Formel I

      **R¹R²C=CR³R⁴** **(I),**

      worin die Reste R¹, R², R³ und R⁴ jeweils unabhängig voneinander für Wasserstoffatome oder substituierte oder unsubstituierte Alkyl, Cycloalkyl-, Alkylcycloalkyl-, Cycloalkylalkyl-, Aryl-, Alkylaryl, Cycloalkylaryl- Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
      herstellt,
(II) das resultierende Copolymerisat (A) mit mindestens einem Polyisocyanat (B) umsetzt, wodurch das Polyurethan (A/B) resultiert, und
(III) mindestens ein weiteres olefinisch ungesättigtes Monomer (a) in Gegenwart des Polyurethans (A/B) (co)polymerisiert.

Im folgenden wird das neue Verfahren zur Herstellung von mit Polyurethanen modifizierten Copolymerisaten als "erfindungsgemäßes Verfahren" bezeichnet.

Weitere erfindungsgemäße Gegenstände gehen aus der Beschreibung hervor.

Die erfindungsgemäßen modifizierten Copolymerisate können nach den unterschiedlichsten Methoden der organischen Polymerchemie, insbesondere der Chemie der Polyurethane und der Copolymerisate hergestellt werden. Erfindungsgemäß ist es von Vorteil, wenn das erfindungsgemäße Verfahren angewandt wird.

Das erfindungsgemäße Verfahren geht aus von der Herstellung mindestens eines Copolymerisats (A) mit im statistischen Mittel mindestens 0,1, vorzugsweise mindestens 0,15, bevorzugt mindestens 0,2, besonders bevorzugt mindestens 0,25, ganz besonders bevorzugt mindestens 0,3 und insbesondere 0,4 isocyanatreaktiven funktionellen Gruppen im Molekül.

Beispiele geeigneter isocyanatreaktiver funktioneller Gruppen sind Thiol-, Hydroxyl- sowie primäre und sekundäre Aminogruppen, insbesondere Hydroxylgruppen.

Das Copolymerisat (A) ist herstellbar durch radikalische Copolymerisation mindestens eines olefinisch ungesättigten Monomers (a) und mindestens eines vom olefinisch ungesättigten Monomer (a) verschiedenen olefinisch ungesättigten Monomers (b).

Als Monomere (b) werden Verbindungen der allgemeinen Formel I verwendet.

In der allgemeinen Formel I stehen die Reste R¹, R² , R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen.

Beispiele geeigneter Alkylreste sind Methyl, Ethyl, Propyl, Isopropyl, n-Butyl, iso-Butyl, tert.-Butyl, Amyl, Hexyl oder 2-Ethylhexyl.

Beispiele geeigneter Cycloalkylreste sind Cyclobutyl, Cyclopentyl oder Cyclohexyl.

Beispiele geeigneter Alkylcycloalkylreste sind Methylencyclohexan, Ethylencyclohexan oder Propan-1,3-diyl-cyclohexan.

Beispiele geeigneter Cycloalkylalkylreste sind 2-, 3- oder 4-Methyl-, -Ethyl-, - Propyl- oder-Butylcyclohex-1-y1.

Beispiele geeigneter Arylreste sind Phenyl, Naphthyl oder Biphenylyl.

Beispiele geeigneter Alkylarylreste sind Benzyl oder Ethylen- oder Propan-1,3-diyl-benzol.

Beispiele geeigneter Cycloallcylarylreste sind 2-, 3-, oder 4-Phenylcyclohex-1-yl.

Beispiele geeigneter Arylalkylreste sind 2-, 3- oder 4-Methyl-, -Ethyl-, -Propyl- oder-Butylphen-1-yl.

Beispiele geeigneter Arylcycloalkylreste sind 2-, 3- oder 4-Cyclohexylphen-1-yl.

Die vorstehend beschriebenen Reste R¹, R², R³ und R⁴ können substituiert sein. Hierzu können elektronenziehende oder elektronenschiebende Atome oder organische Reste verwendet werden, die vorzugsweise nicht isocyanatreaktiv sind.

Beispiele geeigneter Substitutienten sind Halogenatome, insbesondere Chlor und Fluor, Nitrilgruppen, Nitrogruppen, partiell oder vollständig halogenierte, insbesondere chlorierte und/oder fluorierte, Alkyl-, Cycloalkyl-, Alkylcycloalkyl-, Cycloalkylalkyl-, Aryl-, Alkylaryl-, Cycloalkylaryl- Arylalkyl- und Arylcycloalkykeste, inclusive der vorstehend beispielhaft genannten, insbesondere tert.-Butyl; Aryloxy-, Alkyloxy- und Cycloalkyloxyreste, insbesondere Phenoxy, Naphthoxy, Methoxy, Ethoxy, Propoxy, Butyloxy oder Cyclohexyloxy; Arylthio-, Alkylthio- und Cycloalkylthioreste, insbesondere Phenylthio, Naphthylthio, Methylthio, Ethylthio, Propylthio, Butylthio oder Cyclohexylthio; tertiäre Aminogruppen, insbesondere N,N-Dimethylamino, N,N-Diethylamino, N,N-Dipropylamino, N,N-Diphenylamino, N,N-Dicyclohexylamino, N-Cyclohexyl-N-methylamino oder N-Ethyl-N-methylamino.

Beispiele für erfindungsgemäß besonders bevorzugt verwendete Monomere (a2) sind Diphenylethylen, Dinaphthalinethylen, cis- oder trans- Stilben, Vinyliden-bis(4-N,N-dimethylaminobenzol), Vinyliden-bis(4-aminobenzol) oder Vinyliden-bis(4-nitrobenzol).

Erfindungsgemäß können die Monomeren (b) einzeln oder als Gemisch aus mindestens zwei Monomeren (b) verwendet werden.

Hinsichtlich der Reaktionsführung und der Eigenschaften der resultierenden Copolymerisate (A), der hieraus hergestellten Polyurethane (A/B) und der erfindungsgemäßen modifizierten Copolymerisate ist Diphenylethylen von ganz besonderem Vorteil und wird deshalb ganz besonders bevorzugt verwendet

Als olefinisch ungesättigte Monomere (a) kommen grundsätzlich alle Monomere in Betracht, wie sie üblicherweise auf dem Gebiet der Polymerchemie verwendet werden. Die Monomeren (a) lassen sich wie folgt einteilen:
- Monomere (a1), die der Einführung hydrophiler funktioneller Gruppen in die Copolymerisate (A) dienen;
- Monomere (a2), die der Einführung isocyanatreaktiver funktioneller Gruppen in die Copolymerisate (A) dienen; und
- Monomere (a3), die entweder keine funktionellen Gruppen oder funktionelle Gruppen enthalten, die nicht isocyanatreaktiv sind.

Der Einbau der vorstehend beschriebenen isocyanatreaktiven funktionellen Gruppen in die Copolymerisate (A) kann aber auch nach der Copolymerisation durch polymeranaloge Umsetzungen erfolgen. Ein Beispiel für eine solche polymeranaloge Umsetzung ist die Reaktion von seitenständigen (lateralen) oder endständigen (terminalen) Epoxidgruppen mit Carbonsäuren, bei denen Estergruppen und Hydroxylgruppen gebildet werden.

Vorzugsweise werden aber die isocyanatreaktiven funktionellen Gruppen durch die Copolymerisation von olefinisch ungesättigten Monomeren (a2), die im statistischen Mittel mindestens eine, insbesondere eine, isocyanatreaktive funktionelle Gruppe im Molekül enthalten, und/oder über mindestens eine die radikalische Copolymerisation regelnde Verbindung (c), die im statistischen Mittel mindestens eine, insbesondere eine, Thiolgruppe und mindestens eine, insbesondere eine, weitere, von der Thiolgruppe verschiedene, isocyanatreaktive funktionelle Gruppe im Molekül enthält, in die Copolymerisate (A) eingeführt.

Das Monomer (a1) enthält mindestens eine, vorzugsweise eine, funktionelle, vorzugsweise nicht isocyanatreaktive Gruppe, die aus der Gruppe, bestehend aus
(a11) funktionellen Gruppen, die durch Neutralisationsmittel und/oder Quaternisierungsmittel in Kationen überführt werden können, und kationischen Gruppen,
   oder
(a12) funktionellen Gruppen, die durch Neutralisationsmittel in Anionen überführt werden können, und anionischen Gruppen,
   und
(a13) nichtionischen hydrophilen Gruppen,
ausgewählt wird.

Bei der Auswahl der funktionellen Gruppen ist darauf zu achten, daß keine funktionellen Gruppen (a11) mit funktionellen Gruppen (a12) kombiniert werden, weil dies zur Bildung von unlöslichen Polyelektrolytkomplexen führen kann.

Vorzugsweise werden die funktionellen Gruppen (a11) aus der Gruppe, bestehend aus Carbonsäure-, Sulfonsäure- und Phosphonsäuregruppen, sauren Schwefelsäure- und Phosphorsäureestergruppen sowie Carboxylat-, Sulfonat-, Phosphonat-, Sulfatester- und Phosphatestergruppen, insbesondere Carbonsäure- und Carboxylatgruppen, die funktionellen Gruppen (a12) aus der Gruppe, bestehend aus tertiären Aminogruppen und tertiären und quaternären-Ammoniumgruppen, quaternären Phosphoniumgruppen und tertiären Sulfoniumgruppen, insbesondere tertiären Aminogruppen und tertiären und quaternären Ammoniumgruppen, und die funktionellen Gruppen (a13) aus der Gruppe, bestehend aus omega-Hydroxy- und omega-Alkoxy-poly(alkylenoxid)-1-yl-Gruppen, vorzugsweise omega-Hydroxy- und omega-Methoxy-, omega-Ethoxy-, omega-Propyloxy und omega-Butoxy-poly(ethylenoxid)-, poly(propylenoxid)-, -poly(butylenoxid)- und -poly(ethylenoxid-co-propylenoxid)-1-yl-Gruppen, bevorzugt eines Polymerisationsgrades von 5 bis 100, insbesondere 5 bis 50, ausgewählt.

Vorzugeise werden die Neutralisationsmittel für die in Kationen umwandelbare funktionelle Gruppen (a11) aus der Gruppe, bestehend aus Schwefelsäure, Salzsäure, Phosphorsäure, Ameisensäure, Essigsäure, Milchsäure, Dimethylolpropionsäure und Zitronensäure, und die Neutralisationsmittel für die in Anionen umwandelbare funktionelle Gruppen (a12) aus der Gruppe, bestehend aus Ammoniak, Hydrazin, Trimethylamin, Triethylamin, Tributylamin, Dimethylanilin, Diethylanilin, Triphenylamin, Dimethylethanolamin, Diethylethanolamin, Methyldiethanolamin, 2-Aminomethylpropanol, Dimethylisopropylamin, Dimethylisopropanolamin, Triethanolamin, Diethylentriamin und Triefhylentetramin, ausgewählt.

Besonders bevorzugt werden Carbonsäuregruppen und Carboxylatgruppen (a11) sowie die entsprechenden Neutralisationsmittel eingesetzt.

Beispiele geeigneter hydrophiler olefinisch ungesättigter Monomere (a1) sind alpha,beta-olefinisch ungesättigte Carbonsäuren, wie Acrylsäure, Methacrylsäure, Ethacrylsäure, Crotonsäure, Maleinsäure, Fumarsäure, Itaconsäure, Maleinsäure-mono(meth)acryloyloxyethylester, Bernsteinsäuremono(meth)acryloyloxyethylester und Phthalsäuremono(meth)acryloyloxyethylester; sowie Vinylbenzoesäure (alle Isomere) und alpha-Methylvinylbenzoesäure (alle Isomere), die einzeln oder als Gemisch von mindestens zwei Monomeren (A1) eingesetzt werden können. Vorzugsweise werden Acrylsäure und/oder Methacrylsäure verwendet

Beispiele geeigneter olefinisch ungesättigter Monomere (a2) sind
- Hydroxyalkylester von alpha, beta-olefinisch ungesättigten Carbonsäuren, wie Hydroxyalkylester der Acrylsäure, Methacrylsäure und Ethacrylsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat oder -ethacrylat; 1,4-Bis(hydroxymethyl)cyclohexan-, Octahydro-4,7-methano-1H-inden-dimethanol- oder Methylpropandiolmonoacrylat, -monomethacrylat,
- monoethacrylat oder -monocrotonat; oder Umsetzungsprodukte aus cyclischen Estern, wie z.B. epsilon-Caprolacton und diesen Hydroxyalkylestern ;
- olefinisch ungesättigte Alkohole wie Allylalkohol;
- Allylether von Polyolen wie Trimethylolpropanmono- oder diallylether oder Pentaerythritmono-, -di- oder -triallylether. Diese höherfunktionellen Monomeren (a3) werden im allgemeinen nur in untergeordneten Mengen verwendet. Im Rahmen der vorliegenden Erfindung sind hierbei unter untergeordneten Mengen an höherfunktionellen Monomeren solche Mengen zu verstehen, welche nicht zur Vernetzung oder Gelierung der Copolymerisate (A) fuhren, es sei denn, die erfindungsgemäßen modifizierten Copolymerisate sollen in der Form von vernetzten Mikrogelteilchen vorliegen;
- Umsetzungsprodukte alpha,beta-olefinisch Carbonsäuren mit Glycidylestern einer in alpha-Stellung verzweigten Monocarbonsäure mit 5 bis 18 Kohlenstoffatomen im Molekül. Die Umsetzung der Acryl- oder Methacrylsäure mit dem Glycidylester einer Carbonsäure mit einem tertiären alpha-Kohlenstoffatom kann vorher, während oder nach der Polymerisationsreaktion erfolgen. Bevorzugt wird als Komponente (a5) das Umsetzungsprodukt von Acryl- und/oder Methacrylsäure mit dem Glycidylester der Versatic®-Säure eingesetzt. Dieser Glycidylester ist unter dem Namen Cardura® E10 im Handel erhältlich. Ergänzend wird auf Römpp Lexikon Lacke und Druckfarben, Georg Thieme Verlag, Stuttgart, New York, 1998, Seiten 605 und 606, verwiesen;
- Allylamin und Crotylamin;
- Aminoalkylester von alpha,beta-olefinisch ungesättigten Carbonsäuren, wie Aminoethylacrylat, Aminoethylmethacrylat oder N-Methyliminoethylacrylat;
- Formaldehydaddukte von Aminoalkylestern von alpha,beta-olefinisch ungesättigten Carbonsäuren und von alpha,beta-ungesättigten Carbonsäureamiden, wie N-Methylol- und N,N-Dimethylol-aminoethylacrylat, -aminoethylmethacrylat, -acrylamid und - methacrylamid; sowie
- Acryloxysilangruppen enthaltende olefinisch ungesättigte Monomere, herstellbar durch Umsetzung hydroxyfunktioneller Silane mit Epichlorhydrin und anschließender Umsetzung des Zwischenprodukts mit einer alpha,beta-olefinisch ungesättigten Carbonsäure, insbesondere Acrylsäure und Methacrylsäure, oder ihren Hydroxyalkylestern.

Von diesen Monomeren (a2) sind die Hydroxyalkylester, insbesondere die 2-Hydroxyethyl-, 2-Hydroxypropyl-, 3-Hydroxypropyl-, 3-Hydroxybutyl-, 4-Hydroxybutylester der Acrylsäure und Methacrylsäure von Vorteil und werden deshalb besonders bevorzugt verwendet.

Beispiele geeigneter Verbindungen (c) sind Hydroxyl- und/oder primäre und/oder sekundäre Aminogruppen enthaltende Thiole, wie 2-Mercaptoethanol, 3-Mercaptopropanol und 4-Mercaptobutanol, insbesondere 2-Mercaptoethanol.

Beispiele geeigneter Monomere (a3) sind
- Alkyl- und Cycloalkylester von alpha,beta-olefinisch ungesättigten Carbonsäuren, -phosphonsäuren und -sulfonsäuren, wie (Meth)Acrylsäure, Crotonsäure-, Ethacrylsäure-, Vinylphosphonsäure- oder Vinylsulfonsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat, -methacrylat, -crotonat, -ethacrylat oder -vinylphosphonat oder vinylsulfonat; cycloaliphatische (Meth)acrylsäure-, Crotonsäure-, Ethacrylsäure-, Vinylphosphonsäure- oder Vinylsulfonsäureester, insbesondere Cyclohexyl-, Isobornyl-, Dicyclopentadienyl-, Octahydro-4,7-methano-1H-inden methanol- oder tert.-Butylcyclohexyl(meth)acrylat, -crotonat, -ethacrylat, -vinylphosphonat oder vinylsulfonat. Diese können in untergeordneten Mengen höherfunktionelle (Meth)Acrylsäure-, Crotonsäure- oder Ethacrylsäurealkyl- oder -cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder -1,4-diol-di(meth)acrylat; Trimethylolpropan di- oder -tri(meth)acrylat; oder Pentaerythrit-di-, -tri- oder -tetra(meth)acrylat sowie die analogen Ethacrylate oder Crotonate enthalten. Im Rahmen der vorliegenden Erfindung sind hierbei unter untergeordneten Mengen an höherfunktionellen Monomeren (a4) solche Mengen zu verstehen, welche nicht zur Vernetzung oder Gelierung der Copolymerisate (A) führen, es sei denn, die erfindungsgemäßen modifizierten Copolymerisate sollen in der Form von vernetzten Mikrogelteilchen vorliegen;
- Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien;
- Amide von alpha,beta-olefinisch ungesättigten Carbonsäuren, wie (Meth)Acrylsäureamid, N-Methyl -, N,N-Dimethyl-, N-Ethyl-, N,N-Diethyl-, N-Propyl-, N,N-Dipropyl, N-Butyl-, N,N-Dibutyl-, N-Cyclohexyl- und/oder N,N-Cyclohexyl-methyl-(meth)acrylsäureamid;
- Epoxidgruppen enthaltende Monomere, wie der Glycidylester der Acrylsäure, Methacrylsäure, Ethacrylsäure, Crotonsäure, Maleinsäure, Fumarsäure und/oder Itaconsäure;
- Carbamat- oder Allophanatgruppen enthaltende Monomere, wie Acryloyloxy- oder Methacryloyloxyethyl-, propyl- oder butylcarbamat oder -allophanat; weitere Beispiele geeigneter Monomere, welche Carbamatgruppen enthalten, werden in den Patentschriften US 3,479,328 A 1, US 3,674,838 A 1, US 4,126,747 A 1, US 4,279,833 A 1 oder US 4,340,497 A 1 beschrieben;
- vinylaromatische Kohlenwasserstoffe, wie Styrol, alpha-Alkylstyrole, insbesondere alpha-Methylstyrol und Vinyltoluol;
- Nitrile, wie Acrylnitril und/oder Methacrylnitril;
- Vinylverbindungen wie Vinylchlorid, Vinylfluorid, Vinylidendichlorid, Vinylidendifluorid; N-Vinylpyrrolidon; Vinylether wie Ethylvinylether, n-Propylvinylether, Isopropylvinylether, n-Butylvinylether, Isobutylvinylether und/oder Vinylcyclohexylether; Vinylester wie Vinylacetat, Vinylpropionat, Vinylbutyrat, Vinylpivalat, Vinylester der Versatic®-Säuren, die unter dem Markennamen VeoVa® von der Firma Deutsche Shell Chemie vertrieben werden (ergänzend wird auf Römpp Lexikon Lacke und Druckfarben, Georg Thieme Verlag, Stuttgart, New York, 1998, Seite 598 sowie Seiten 605 und 606, verwiesen) und/oder der Vinylester der 2-Methyl-2-ethylheptansäure; und
- Polysiloxanmakromonomere, die ein zahlenmittleres Molekulargewicht Mn von 1.000 bis 40.000, bevorzugt von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE 38 07 571 A 1 auf den Seiten 5 bis 7, der DE 37 06 095 A 1 in den Spalten 3 bis 7, der EP 0 358 153 B 1 auf den Seiten 3 bis 6, in der US 4,754,014 A 1 in den Spalten 5 bis 9, in der DE 44 21 823 A 1 oder in der der internationalen Patentanmeldung WO 92/22615 auf Seite 12, Zeile 18, bis Seite 18, Zeile 10, beschrieben sind

Aus den vorstehend beschriebenen geeigneten Monomeren (a) und (b) sowie Verbindungen (c) kann der Fachmann die für den jeweiligen Verwendungszweck besonders gut geeigneten Monomeren (a) und Verbindungen (c) anhand ihrer bekannten physikalisch chemischen Eigenschaften und Reaktivitäten leicht auswählen.

Beispielweise kann er Monomere (a2) und/oder (a3) auswählen, durch die reaktive funktionelle Gruppen, die für die thermische Vernetzung geeignet sind, wie N-Methylol-, N-Methoxy-, Carbamat-, Allophanat- oder Epoxidgruppen, eingeführt werden.

Sollen die Copolymerisate (A) und die hieraus hergestellten erfindungsgemäßen modifizierten Copolymerisate in Wasser löslich oder dispergierbar sein, werden Monomere (a1) in den entsprechenden Mengen eingesetzt.

Sollen die Copolymerisate (A) und die hieraus hergestellten erfindungsgemäßen modifizierten Copolymerisate in organischen Lösemitteln löslich oder dispergierbar sein, werden keine oder nur geringe Mengen an Monomeren (a1) verwendet. Bevorzugt werden dann Monomere (a2) und/oder Monomere (a3) eingesetzt, die nur geringfügig hydrophil, vorzugsweise hydrophob, sind.

Es ist somit ein besonderer Vorteil der vorliegenden Erfindung, daß die hydrophilen und hydrophoben Eigenschaften der Copolymerisate (A) und der hieraus hergestellten erfindungsgemäßen modifizierten Copolymerisate gezielt eingestellt und den jeweiligen Verwendungszwecken genau angepaßt werden können.

Sollen die erfindungsgemäßen modifizierten Copolymerisate in der Form von vernetzten Mikrogelteilchen vorliegen oder diese enthalten, werden höherfunktionelle Monomere (a), insbesondere die vorstehend beschriebenen höherfunktionellen Monomeren (a1), (a2) und/oder (a3), in Mengen angewandt, die zu einer gezielten Vernetzung der Copolymerisate (A) führen.

Vorzugsweise werden die Monomeren (a) so ausgewählt, daß das Eigenschaftsprofil der Copolymerisate (A) im wesentlichen von den vorstehend beschriebenen (Meth)Acrylatmonomeren (a1), (a2) und/oder (a3) bestimmt wird, wobei die Monomeren (b) dieses Eigenschaftsprofil in vorteilhafter Weise breit und gezielt variieren. Somit handelt es sich bei den besonders vorteilhaften Copolymerisaten (A) um (Meth)Acrylatcopolymerisate.

Die Copolymerisation der Gemische aus
- den Monomeren (a) und (b) oder
- den Monomeren (a) und (b) und den Verbindungen (c)
weist keine methodischen Besonderheiten auf, sondern erfolgt nach den üblichen und bekannten Methoden der radikalischen Lösungspolymeriation in einem nichtwäßrigen Medium, d.h. in organischer Lösung, oder der Emulsionspolymerisation, Miniemulsionspolymerisation oder Mikroelmulsionspolymerisation in Gegenwart mindestens eines radikalischen Initiators in einem wäßrigen Medium, so wie beispielsweise in den Patentanmeldungen und Patentschriften DE 197 22 862 C 2, DE 196 45 761 A 1, EP 0 401 565 A 1, EP 0 522 420 A 1, EP 0 522 419 A 2, EP 0 755 946 A 1, EP 0 608 021 A 1, EP 0 708 788 A 1 oder EP 0 730 613 A 1 sowie in den nicht vorveröffentlichten deutschen Patentanmeldungen 199 53 446.2, 199 53 445.2 oder 199 53 203.6 beschrieben.

Vorzugsweise wird die Emulsionspolymerisation angewandt.

Das wäßrige Medium enthält im wesentlichen Wasser. Hierbei kann das wäßrige Medium in untergeordneten Mengen organische Lösemittel und/oder sonstige gelöste feste, flüssige oder gasförmige organische und/oder anorganische, nieder- und/oder hochmolekulare Stoffe, insbesondere Hilfsstoffe wie oberflächenaktive Substanzen, enthalten, sofern diese nicht die Copolymerisation in negativer Weise beeinflussen oder gar hemmen. Im Rahmen der vorliegenden Erfindung ist unter dem Begriff "untergeordnete Menge" eine Menge zu verstehen, welche den wäßrigen Charakter des wäßrigen Mediums nicht aufhebt. Bei dem wäßrigen Medium kann es sich aber auch um reines Wasser handeln.

Vorzugsweise wird die Copolymerisation in der Gegenwart mindestens einer Base durchgeführt. Besonders bevorzugt sind niedermolekulare Basen wie Natronlauge, Kalilauge, Ammoniak, Diethanolamin, Triethanolamin, Mono-, Di- und Triethylamin, und/oder Dimethylethanolamin, insbesondere Ammoniak.

Als Beispiele für einsetzbare radikalische Initiatoren werden genannt: Dialkylperoxide, wie Di-tert.-Butylperoxid oder Dicumylperoxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethyl- hexanoat oder tert.-Butylper-2-ethylhexanoat; Peroxodicarbonate; Kalium-, Natrium- oder Ammoniumsperoxodisulfat; Azoinitiatoren, beispielsweise Azodinitrile wie Azobisisobutyronitril; C-C-spaltende Initiatoren wie Benzpinakolsilylether; oder eine Kombination eines nicht oxidierenden Initiators mit Wasserstoffperoxid. Des können auch Kombinationen der vorstehend beschriebenen Initiatoren eingesetzt werden.

Weitere Beispiele geeigneter Initiatoren werden in der deutschen Patentanmeldung DE 196 28 142 A 1, Seite 3, Zeile 49, bis Seite 4, Zeile 6, beschrieben.

Vorzugsweise werden vergleichsweise große Mengen an radikalischem Initiator zugegeben, wobei der Anteil des Initiators am Reaktionsgemisch, jeweils bezogen auf die Gesamtmenge der Monomeren (A) und des Initiators, besonders bevorzugt 0,2 bis 20 Gew.-%, ganz besonders bevorzugt 0,5 bis 15 Gew.-% und insbesondere 1,0 bis 10 Gew.-% beträgt.

In den organischen Lösungen oder den wäßrigen Emulsionen werden dann die Monomeren (a) und (b) mit Hilfe der vorstehend genannten radikalbildenden Initiatoren bei Temperaturen von 0 bis 95°C, vorzugsweise 40 bis 95 °C, und bei Verwendung von Redoxsystemen bei Temperaturen von 30 bis 70 °C polymerisiert. Bei Arbeiten unter Überdruck kann die Emulsionspolymerisation auch bei Temperaturen oberhalb 100°C durchgeführt werden. Gleiches gilt für die Lösungspolymerisation, wenn höhersiedende organische Lösemittel und/oder Überdruck angewandt wird.

Es ist bevorzugt, daß mit dem Initiatorzulauf einige Zeit, im allgemeinen ca. 1 bis 15 Minuten, vor dem Zulauf der Monomeren begonnen wird. Ferner ist ein Verfahren bevorzugt, bei dem die Initiatorzugabe zum gleichen Zeitpunkt wie die Zugabe der Monomeren begonnen und etwa eine halbe Stunde, nachdem die Zugabe der Monomeren beendet worden ist, beendet wird. Der Initiator wird vorzugsweise in konstanter Menge pro Zeiteinheit zugegeben. Nach Beendigung der Initiatorzugabe wird das Reaktionsgemisch noch so lange (in der Regel 1 bis 6 Stunden) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.%, bezogen auf das Gewicht der Reaktionsmischung, unumgesetzt zurückbleiben kann.

Als Reaktoren für die Copolymerisation kommen die üblichen und bekannten Rührkessel, Rührkesselkaskaden, Rohrreaktoren, Schlaufenreaktoren oder Taylorreaktoren, wie sie beispielsweise in der Patentschrift DE 1 071 241 B 1, den Patentanmeldungen EP 0 498 583 A 1 oder DE 198 28 742 A 1 oder in dem Artikel von K. Kataoka in Chemical Engineering Science, Band 50, Heft 9,1995, Seiten 1409 bis 1416, beschrieben werden, in Betracht.

Hinsichtlich der Molekulargewichtsverteilung ist das Copolymerisat (A) keinerlei Beschränkungen unterworfen. Vorteilhafterweise wird aber die Copolymerisation so geführt, daß eine Molekulargewichtsverteilung Mw/Mn gemessen mit Gelpermeationschromatographie unter Verwendung von Polystyrol als Standard von≤ 4, vorzugsweise sonders bevorzugt ≤ 2 und insbesondere ≤ 1,5 sowie in einzelnen Fällen auch ≤ 1,3 resultiert. Die Molekulargewichte der Copolymerisate (A) sind durch die Wahl des Verhältnisses:
"Monomere (a) / Monomer (b) / radikalischer Initiator",
in weiten Grenzen steuerbar. Dabei bestimmt insbesondere der Gehalt an Monomer (b) das Molekulargewicht, und zwar derart, daß je größer der Anteil an Monomer (b) ist, desto geringer ist das erhaltene Molekulargewicht.

Die Copolymerisate (A) können vor ihrer Umsetzung mit den Polyisocyanaten (B) isoliert werden. Verfahrenstechnisch ist es aber von Vorteil, die Copolymerisate (A) in den organischen Lösungen oder wäßrigen Dispersionen, insbesondere wäßrigen Dispersionen, in denen sie anfallen, zu den Umsetzungsprodukten oder Polyurethane (A/B) umzusetzen.

Hierbei werden die Polyisocyanate (B) vorzugsweise aus der Gruppe, bestehend aus acyclischen aliphatischen, cycloaliphatischen, und aromatischen Diisocyanaten, Oligomeren dieser Diisocyanate sowie Polyurethanpräpolymeren mit endständigen freien Isocyanatgruppen, ausgewählt. In den cycloaliphatischen Diisocyanaten ist mindestens eine Isocyanatgruppe mit einer cycloaliphatischen Struktureinheit verbunden. In den aromatischen Diisocyanaten ist mindestens eine Isocyanatgruppe mit einer aromatischen Struktureinheit verbunden. In den acyclischen aliphatischen Diisocyanaten sind beide Isocyanatgruppen mit einer acyclischen aliphatischen Struktureinheit verbunden.

Beispiele geeigneter Diisocyanate (B) sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan,1-Isocyanato-2-(3-isocyanatoeth 1-yl)cyclohexan,1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4- Diisocyanatocyclohexan, Dicyclohexylmethan-2,4'-diisocyanat, Trimethylendiisocyanat, Tetramethylendiisocyanat, Pentamethylendiisocyanat, Hexamethylendiisocyanat, Ethylethylendiisocyanat, Trimethylhexandiisocyanat, Heptanmethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan, 1,2-, 1,4- oder 1,3-Bis(4-isocyanatobut-1-yl)cyclohexan, flüssiges Bis(4-isocyanatocyclohexyl)methan eines trans/trans-Gehalts von bis zu 30 Gew.-%, vorzugsweise 25 Gew.-% und insbesondere 20 Gew.-%, wie es den Patentschriften DE 44 14 032 A1, GB 1 220 717 A 1, DE-A-16 18 795 oder DE 17 93 785 A 1 beschrieben wird; Toluylendiisocyanat, Xylylendiisocyanat, Bisphenylendiisocyanat, Naphthylendiisocyanat oder Diphenylmethandiisocyanat.

Beispiele geeigneter oligomerer Polyisocyanate (B) sind die Oligomeren der vorstehend beschriebenen Diisocyanate (B), die insbesondere Isocyanurat-, Biuret-, Allophanat-, Iminooxadiazindion-, Urethan-, Harnstoff-, Carbodiimid- und Uretdiongruppen enthalten.

Geeignete Polyurethanpräpolymere (B) mit endständigen freien Isocyanatgruppen sind herstellbar, indem man zumindest mindestens eines der vorstehend beschriebenen Diisocyanate (B) mit mindestens einer Verbindung mit im statistischen Mittel mindestens zwei, insbesondere zwei, der vorstehend beschriebenen isocyanatreaktiven funktionellen Gruppen im Molekül und mindestens einer Verbindung mit im statistischen Mittel mindestens zwei, insbesondere zwei, der vorstehend beschriebenen isocyanatreaktiven funktionellen Gruppen und mindestens einer, insbesondere einer, der vorstehend beschriebenen hydrophilen funktionellen Gruppe im Molekül umsetzt, wobei das Molverhältnis von Isocyanatgruppen zu isocyanatreaktiven funktionellen Gruppen > 1 ist. Vorzugsweise werden Hydroxylgruppen als isocyanatreaktive funktionelle Gruppen angewandt.

Beispiele geeigneter Verbindungen mit im statistischen Mittel mindestens zwei, insbesondere zwei, der vorstehend beschriebenen isocyanatreaktiven funktionellen Gruppen im Molekül sind Polyole, insbesondere Diole.

Beispiele geeigneter Polyole sind gesättigte oder olefinisch ungesättigte Polyesterpolyole, welche durch Umsetzung von
- gegebenenfalls sulfonierten gesättigen und/oder ungesättigten Polycarbonsäuren oder deren veresterungsfähigen Derivaten, gegebenenfalls zusammen mit Monocarbonsäuren, sowie
- gesättigten und/oder ungesättigten Polyolen, gegebenenfalls zusammen mit Monoolen,
hergestellt werden.

Beispiele für geeignete Polycarbonsäuren sind aromatische, aliphatische und cycloaliphatische Polycarbonsäuren. Bevorzugt werden aromatische und/oder aliphatische Polycarbonsäuren eingesetzt.

Beispiele für geeignete aromatische Polycarbonsäuren sind Phthalsäure, Isophthalsäure, Terephthalsäure, Phthalsäure-, Isophthalsäure- oder Terephthalsäuremonosulfonat, oder Halogenphthalsäuren, wie Tetrachlor- bzw. Tetrabromphthalsäure, von denen Isophthalsäure vorteilhaft ist und deshalb bevorzugt verwendet wird.

Beispiele für geeignete acyclische aliphatische oder ungesättigte Polycarbonsäuren sind Oxalsäure, Malonsäure, Bernsteinsäure, Glutarsäure, Adipinsäure, Pimelinsäure, Korksäure, Azelainsäure, Sebacinsäure, Undecandicarbonsäure oder Dodecandicarbonsäure oder Maleinsäure, Fumarsäure oder Itaconsäure, von denen Adipinsäure, Glutarsäure, Azelainsäure, Sebacinsäure, Dimerfettsäuren und Maleinsäure vorteilhaft sind und deshalb bevorzugt verwendet werden.

Beispiele für geeignete cycloaliphatische und cyclische ungesättigte Polycarbonsäuren sind 1,2-Cyclobutandicarbonsäure, 1,3-Cyclobutandicarbonsäure, 1,2-Cyclopentandicarbonsäure, 1,3-Cyclopentandicarbonsäure, Hexahydrophthalsäure, 1,3-Cyclohexandicarbonsäure, 1,4-Cyclohexandicarbonsäure, 4-Methylhexahydrophthalsäure, Tricyclodecandicarbonsäure, Tetrahydrophthalsäure oder 4-Methyltetrahydrophthalsäure. Diese Dicarbonsäuren können sowohl in ihrer cis- als auch in ihrer trans-Form sowie als Gemisch beider Formen eingesetzt werden.

Weitere Beispiele für geeignete Polycarbonsäuren sind polymere Fettsäuren, insbesondere solche mit einem Dimerengehalt von mehr als 90 Gew.%, die auch als Dimerfettsäuren bezeichnet werden.

Geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen. Außerdem können auch die Anhydride der obengenannten Polycarbonsäuren eingesetzt werden, sofern sie existieren.

Gegebenenfalls können zusammen mit den Polycarbonsäuren auch Monocarbonsäuren eingesetzt werden, wie beispielsweise Benzoesäure, tert.-Butylbenzoesäure, Laurinsäure, Isononansäure oder Fettsäuren natürlich vorkommender Öle sowie Acrylsäure, Methacrylsäure, Ethacrylsäure oder Crotonsäure. Bevorzugt wird als Monocarbonsäure Isononansäure eingesetzt.

Beispiele geeigneter niedermolekularer Polyole sind Diole und Triole, insbesondere Diole. Üblicherweise werden Triole neben den Diolen in untergeordneten Mengen verwendet, um Verzweigungen in die Polyesterpolyole einzuführen. Im Rahmen der vorliegenden Erfindung sind unter untergeordneten Mengen Mengen zu verstehen, die kein Gelieren der Polyesterpolyole bei ihrer Herstellung bewirken.

Beispiele geeigneter niedermolekularer Diole sind Ethylenglykol, 1,2- oder 1,3-Propandiol, 1,2-, 1,3- oder 1,4-Butandiol, 1,2-, 1,3-, 1,4- oder 1,5-Pentandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclohexandiol, 1,2-, 1,3-oder 1,4-Cyclohexandimethanol, Trimethylpentandiol, Ethylbutylpropandiol, die stellungsisomeren Diethyloctandiole, 2-Butyl-2-ethylpropandiol-1,3, 2-Butyl-2-methylpropandiol-1,3, 2-Phenyl-2-methylpropan-diol-1,3, 2-Propyl-2-ethylpropandiol-1,3, 2-Di-tert.-butylpropandiol-1, 3, 2-Butyl-2-propylpropandiol-1,3, 1-Dihydroxymethyl-bicyclo[2.2.1]heptan, 2,2-Diethylpro-pandiol-1,3, 2,2-Dipropylpropandiol-1,3, 2-Cyclohexyl-2-methylpropandiol-1,3, 2,5-Dimethyl-hexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-(2'-Hydroxypropyl)-benzol oder 1,3-(2'-Hydroxypropyl)-benzol.

Von diesen niedermolekularen Diolen sind 1,6-Hexandiol und Neopentylglykol besonders vorteilhaft und werden deshalb besonders bevorzugt verwendet.

Die vorstehend genannten niedermolekularen Diole können auch als Diole direkt für die Herstellung der Polyurethanpräpolymere eingesetzt werden.

Beispiele geeigneter niedermolekularer Triole sind Trimethylolethan, Trimethylolpropan oder Glycerin, insbesondere Trimethylolpropan.

Die vorstehend genannten niedermolekularen Triole können auch als Triole direkt für die Herstellung der Polyurethanpräpolymere eingesetzt werden (vgl. die Patentschrift EP 0 339 433 A 1).

Gegebenenfalls können untergeordnete Mengen von Monoolen mit verwendet werden. Beispiele geeigneter Monoole sind Alkohole oder Phenole wie Ethanol, Propanol, n-Butanol, sec.-Butanol, tert.-Butanol, Amylalkohole, Hexanole, Fettalkohole, Phenol oder Allylalkohol.

Die Herstellung der Polyesterpolyole kann in Gegenwart geringer Mengen eines geeigneten Lösemittels als Schleppmittel durchgeführt werden. Als Schleppmittel werden z. B. aromatische Kohlenwasserstoffe, wie insbesondere Xylol und (cyclo)aliphatische Kohlenwasserstoffe, z. B. Cyclohexan oder Methylcyclohexan, eingesetzt.

Weitere Beispiele geeigneter Polyole sind Polyesterdiole, die durch Umsetzung eines Lactons mit einem Diol erhalten werden. Sie zeichnen sich durch die Gegenwart von entständigen Hydroxylgruppen und wiederkehrenden Polyesteranteilen der Formel -(-CO-(CHR⁵)ₘ- CH₂-O-)- aus. Hierbei ist der Index m bevorzugt 4 bis 6 und der Substitutent R⁵ = Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Für die Herstellung der Polyesterdiole wird das unsubstituierte epsilon-Caprolacton, bei dem m den Wert 4 hat und alle R-Substituenten Wasserstoff sind, bevorzugt. Die Umsetzung mit Lacton wird durch niedermolekulare Polyole wie Ethylenglykol, 1,3-Propandiol, 1,4-Butandiol oder Dimethylolcyclohexan gestartet. Es können jedoch auch andere Reaktionskomponenten, wie Ethylendiamin, Alkyldialkanolamine oder auch Harnstoff mit Caprolacton umgesetzt werden. Als höhermolekulare Diole eignen sich auch Polylactamdiole, die durch Reaktion von beispielsweise epsilon-Caprolactam mit niedermolekularen Diolen hergestellt werden.

Weitere Beispiele geeigneter Polyole sind Polyetherpolyole, insbesondere mit einem zahlenmittleren Molekulargewicht von 400 bis 5.000, insbesondere von 400 bis 3.000. Gut geeignete Polyetherdiole sind z.B. Polyetherdiole der allgemeinen Formel H-(-O-(CHR⁶)ₒ-)ₚOH, wobei der Substituent R⁶ = Wasserstoff oder ein niedriger, gegebenenfalls substituierter Alkylrest ist, der Index o = 2 bis 6, bevorzugt 3 bis 4, und der Index p = 2 bis 100, bevorzugt 5 bis 50, ist. Als besonders gut geeignete Beispiele werden lineare oder verzweigte Polyetherdiole wie Poly(oxyethylen)glykole, Poly(oxypropylen)glykole und Poly(oxybutylen)glykole genannt.

Durch die Polyetherdiole können die nichtionischen hydrophilen funktionellen Gruppen (a13) oder ein Teil hiervon in die Hauptkette(n) der Polyurethanpräpolymeren (B) eingeführt werden.

Beispiele geeigneter Verbindungen mit im statistischen Mittel mindestens zwei, insbesondere zwei, der vorstehend beschriebenen isocyanatreaktiven funktionellen Gruppen und mindestens einer, insbesondere einer, der vorstehend beschriebenen hydrophilen funktionellen Gruppe im Molekül sind
- 2,2-Dimethylolethyl- oder -propylamin, die mit einem Keton blockiert sind, wobei die resultierende Ketoximgruppe vor der Bildung der kationischen Gruppe (a11) wieder hydrolysiert wird, oder N,N-Dimethyl-, N,N-Diethyl- oder N-Methyl-N-ethyl-2,2-dimethylolethyl- oder - propylamin;
- Dihydroxypropionsäure, Dihydroxybernsteinsäure, Dihydroxybenzoesäure, 2,2-Dimethylolessigsäure, 2,2-Dimethylolpropionsäure, 2,2-Dimethylolbuttersäure, 2,2-Dimenthylolpentansäure, alpha,alpha-Diaminovaleriansäure, 3,4-Diaminobenzoesäure, 2,4-Diaminotoluolsulfonsäure und 2,4-Diaminodiphenylethersulfonsäure sowie
- die vorstehend beschriebenen Polyetherpolyole.

Als Neutralisationsmittel können die vorstehend beschriebenen verwendet werden.

Für die Herstellung der Polyurethanpräpolymeren (B) können noch weitere Ausgangsverbindungen verwendet werden, um das Eigenschaflsprofil der erfindungsgemäßen modifizierten Copolymerisate in vorteilhafter Weise zu variieren.

Sollen die erfindungsgemäßen modifizierten Copolymerisate selbstvernetzende Eigenschaften aufweisen, kann mindestens eine Verbindung mit mindestens einer blockierten Isocyanatgruppe und mindestens zwei isocyanatreaktiven funktionellen Gruppen verwendet werden. Beispiele geeigneter isocyanatreaktiver Gruppen sind die vorstehend genannten, von denen die primären und sekundären Aminogruppen und die Hydroxylgruppen von Vorteil und die Hydroxylgruppen von besonderem Vorteil sind. Beispiele geeigneter Blockierungsmittel sind die aus der US-Patentschrift US 4,444,954 A 1 bekannten Blockierungsmittel, von denen die Oxime und Ketoxime, insbesondere die Ketoxime, speziell Methylethylketoxim, besondere Vorteile bieten und deshalb besonders bevorzugt verwendet werden. Die blockierten Isocyanatgruppen können aber auch aus der Umsetzung der freien Isocyanatgruppen des Polyurethanpräpolymeren mit den Blockierungsmitteln resultieren. Allerdings müssen nach der Umsetzung noch freie Isocyanatgruppen für die Umsetzung mit den Copolymerisaten (A) vorhanden sein.

Methodisch gesehen weist die Herstellung der isocyanatgruppenhaltigen Polyurethanpräpolymeren (B) keine Besonderheiten auf, sondern kann, wie in den Patentschriften EP 0 089 497 B 1 oder EP 0 228 003 B 1 beschrieben, in Masse oder in einem inerten organischen Medium, vorzugsweise in einem inerten organischen Medium erfolgen, wobei polare organische Lösemittel, insbesondere wassermischbare Lösemittel wie Ketone, Ester, Ether, cyclische Amide oder Sulfoxide, bevorzugt angewandt werden. Hierbei kann die Umsetzung in mehreren Stufen oder in einer Stufe erfolgen. Wesentlich ist, daß die Umsetzung so lange erfolgt, bis der Gehalt an freien Isocyanatgruppen konstant ist.

Die Umsetzung der vorstehend beschriebenen Copolymerisate (A) mit den vorstehend beschriebenen Polyisocyanaten (B) weist gleichfalls keine methodischen Besonderheiten auf, sondern erfolgt durch Vermischen der organischen Lösungen oder der wäßrigen Dispersionen der Copolymerisate (A) mit den Polyisocyanaten (B) oder ihren Lösungen, vorzugsweise mit ihren Lösungen, in geeigneten Reaktionsgefäßen, beispielsweise den vorstehend beschriebenen. Vorzugsweise wird dabei das molare Verhältnis von isocyanatreaktiven Gruppen in den Copolymerisaten (A) und den freien Isocyanatgruppen in den Polyisocyanaten (B) so gewählt, daß nach der Umsetzung zu dem Polyurethan (A/B) keine freien Isocyanatgruppen mehr vorhanden sind.

Die Polyurethane (A/B) können aus den organischen Lösungen oder den wäßrigen Dispersionen, in denen sie anfallen, isoliert und zur Copolymerisation mit den weiteren olefinisch ungesättigten Monomeren, (a) in andere Reaktionsmedien überführt werden. Vorzugsweise wird die Copolymerisation in den organischen Lösungen oder den wäßrigen Dispersionen, insbesondere in den wäßrigen Dispersionen, in denen sie anfallen, durchgeführt.

Methodisch gesehen weist die Copolymerisation der Polyurethane (A/B) mit den weiteren Monomeren (a) keine methodischen Besonderheiten auf, sondern erfolgt mit Hilfe der vorstehend bei der Herstellung der Copolymerisate (A) beschriebenen Verfahren und Vorrichtungen. Es ist ein wesentlicher Vorteil des erfindungsgemäßen Verfahrens, daß diese Copolymerisation in Abwesenheit der vorstehend beschriebenen radikalischen Initiatoren durchgeführt werden kann.

Als weitere Monomere (a) kommen alle vorstehend beschriebenen in Betracht. Vorzugsweise werden Monomere (a2) und/oder (a3) angewandt. Die hydrophilen oder hydrophoben Eigenschaften können noch durch die Verwendung von Monomeren (a1) gezielt gesteuert werden.

Die erfindungsgemäßen modifizierten Copolymerisate können aus den organischen Lösungen oder den wäßrigen Dispersionen, in denen sie anfallen, isoliert und den unterschiedlichsten Verwendungszwecken, insbesondere in lösemittelhaltigen, wasser- und lösemittelfreien pulverförmigen festen oder wasser- und lösemittelfieien flüssigen Beschichtungsstoffen, Klebstoffen und Dichtungsmassen, zugeführt werden. So eignen sie sich vor allem zu Herstellung von pigmentierten oder nicht pigmentierten, konventionellen oder wäßrigen Lacken, Pulverlacken, Pulverslurry-Lacken oder 100%-Systemen (wasser- und lösemittelfreie flüssige Systeme).

Die organischen Lösungen der erfindungsgemäßen modifizierten Copolymerisate können aber auch in Wasser dispergiert werden, wodurch sekundäre wäßrige Dispersionen resultieren, die als wäßrige Beschichtungsstoffe, Klebstoffe und Dichtungsmassen oder zu deren Herstellung verwendet werden können.

Erfindungsgemäß ist es von Vorteil, die organischen Lösungen oder die primären wäßrigen Dispersionen der erfindungsgemäßen modifizierten Copolymerisate, insbesondere die wäßrigen Dispersionen, als Beschichtungsstoffen, Klebstoffe und Dichtungsmassen oder zu deren Herstellung zu verwenden.

In der Verwendung als Beschichtungsstoffe zeigen die erfindungsgemäßen, modifizierten Copolymerisate hervorragende Filmbildungseigenschaften.

Hierbei können die erfindungsgemäßen Beschichtungsstoffe, Klebstoffe und Dichtungsmassen physikalisch, thermisch oder thermisch und mit aktinischer Strahlung härtbar sein.

Im Rahmen der vorliegenden Erfindung bedeutet der Begriff "physikalische Härtung" die Härtung einer Schicht aus einem Beschichtungsstoff, einem Klebstoff oder einer Dichtungsmasse durch Verfilmung durch Lösemittelabgabe aus dem Beschichtungsstoff dem Klebstoff oder der Dichtungsmasse, wobei die Verknüpfung innerhalb der Beschichtung, Klebschicht oder Dichtung über Schlaufenbildung der Polymermoleküle der Bindemittel (zu dem Begriff vgl. Römpp Lexikon Lacke und Druckfarben, Georg Thieme Verlag, Stuttgart, New York, 1998, »Bindemittel«, Seiten 73 und 74) erfolgt. Oder aber die Verfilmung erfolgt über die Koaleszenz von Bindemittelteilchen (vgl. Römpp Lexikon Lacke und Druckfarben, Georg Thieme Verlag, Stuttgart, New York, 1998, »Härtung«, Seiten 274 und 275). Üblicherweise sind hierfür keine Vernetzungsmittel notwendig. Gegebenenfalls kann die physikalische Härtung durch Luftsauerstoff, Hitze oder durch Bestrahlen mit aktinischer Strahlung unterstützt werden.

Im Rahmen der vorliegenden Erfindung bezeichnet der Begriff "selbstvernetzend" die Eigenschaft eines Bindemittels mit sich selbst Vernetzungsreaktionen einzugehen. Voraussetzung hierfür ist, daß in den Bindemitteln bereits beide Arten von komplementären reaktiven funktionellen Gruppen enthalten sind, die für eine Vernetzung notwendig sind. Als fremdvernetzend werden dagegen solche Beschichtungsstoffe, Klebstoffe und Dichtungsmassen bezeichnet, worin die eine Art der komplementären reaktiven funktionellen Gruppen in dem Bindemittel, und die andere Art in einem Härter oder Vernetzungsmittel vorliegen. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen.

Im Rahmen der vorliegenden Erfindung ist unter aktinischer Strahlung elektromagnetische Strahlung, wie nahes Infrarot (NIR), sichtbares Licht, UV-Strahlung oder Röntgenstrahlung, insbesondere UV-Strahlung, und Korpuskularstrahlung wie Elektronenstrahlung zu verstehen. Werden die thermische und die Härtung mit aktinischer Strahlung gemeinsam angewandt, spricht man auch von "Dual Cure" und ,,Dual-Cure-Beschichtungsstoff", "Dual-Cure-Klebstoff" oder ,,Dual-Cure-Dichtungsmasse".

Die erfindungsgemäßen Klebstoffe können außer den erfindungsgemäßen modifizierten Copolymerisaten weitere geeignete übliche und bekannte Bestandteile in wirksamen Mengen enthalten. Beispiele geeigneter Bestandteile sind die nachstehend beschriebenen Vernetzungsmittel und Additive, soweit sie für die Herstellung von Klebstoffen in Betracht kommen.

Die erfindungsgemäßen Dichtungsmassen können ebenfalls außer den erfindungsgemäßen modifizierten Copolymerisaten weitere geeignete übliche und bekannte Bestandteile in wirksamen Mengen enthalten. Beispiele geeigneter Bestandteile sind ebenfalls die nachstehend beschriebenen Vernetzungsmittel und Additive, soweit sie für die Herstellung von Dichtungsmassen in Betracht kommen.

Die erfindungsgemäßen Primärdispersionen und Sekundärdispersionen der modifizierten Copolymerisate sind vor allem für die Herstellung wäßriger Beschichtungsstoffe, insbesondere wäßriger Lacke, geeignet. Beispiele für erfindungsgemäße wäßrige Lacke sind Füller, Unidecklacke, Wasserbasislacke und Klarlacke. Ganz besondere Vorteile entfalten die erfindungsgemäßen Primärdispersionen und Sekundärdispersionen, wenn sie zur Herstellung von Klarlacken und Wasserbasislacken verwendet werden.

Der weitere wesentliche Bestandteil des erfindungsgemäßen Wasserbasislacks ist mindestens ein farb- und/oder effektgebendes, fluoreszierendes, elektrisch leitfähiges oder magnetisch abschirmendes Pigment, ein Metallpulver und/oder ein Farbstoff. Die Pigmente und Farbstoffe können aus anorganischen oder organischen Verbindungen bestehen.

Beispiele geeigneter Effektpigmente sind Metallplättchenpigmente wie handelsübliche Aluminiumbronzen, gemäß DE 36 36 183 A 1 chromatierte Aluminiumbronzen, und handelsübliche Edelstahlbronzen sowie nichtmetallische Effektpigmente, wie zum Beispiel Perlglanz- bzw. Interferenzpigmente, plättchenförmige Effektpigmente auf der Basis von Eisenoxid, das einen Farbton von Rosa bis Braunrot aufweist oder flüssigkristalline Effektpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, und die Patentanmeldungen und Patente DE 36 36 156 A 1, DE 37 18 446 A 1, DE 37 19 804 A 1, DE 39 30 601 A 1, EP 0 068 311 A 1, EP 0 264 843 A 1, EP 0 265 820 A 1, EP 0 283 852 A 1, EP 0 293 746 A 1, EP 0 417 567 A 1, US 4,828,826 A oder US 5,244,649 A verwiesen.

Beispiele für geeignete anorganische farbgebende Pigmente sind Weißpigmente wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentvolumenkonzentration«, Seite 563 »Thioindigo-Pigmente«, Seite 567 »Titandioxid-Pigmente«, Seiten 400 und 467, »Natürlich vorkommende Pigmente«, Seite 459 »Polycyclische Pigmente«, Seite 52, »AzomethinPigmente«, »Azopigmente«, und Seite 379, »Metallkomplex-Pigmente«, verwiesen.

Beispiele für fluoreszierende Pigmente (Tagesleuchtpigmente) sind Bis(azomethin)-Pigmente.

Beispiele für geeignete elektrisch leitfähige Pigmente sind Titandioxid/Zinnoxid-Pigmente.

Beispiele für magnetisch abschirmende Pigmente sind Pigmente auf der Basis von Eisenoxiden oder Chromdioxid.

Beispiele für geeignete Metallpulver sind Pulver aus Metallen und Metallegierungen Aluminium, Zink, Kupfer, Bronze oder Messing.

Geeignete organische Farbstoffe sind lichtechte organische Farbstoffe mit einer geringen oder nicht vorhandenen Neigung zur Migration aus dem erfindungsgemäßen Pulverlack und den hieraus hergestellten Beschichtungen. Die Migrationsneigung kann der Fachmann anhand seines allgemeinen Fachwissens abschätzen und/oder mit Hilfe einfacher orientierender Vorversuche beispielsweise im Rahmen von Tönversuchen ermitteln.

Der erfindungsgemäße Wasserbasislack kann des weiteren organische und anorganische Füllstoffe enthalten.

Beispiele geeigneter organischer und anorganischer Füllstoffe sind Kreide, Calciumsulfate, Bariumsulfat, Silikate wie Talkum, Glimmer oder Kaolin, Kieselsäuren, Oxide wie Aluminiumhydroxid oder Magnesiumhydroxid oder organische Füllstoffe wie Kunststoffpulver, insbesondere aus Poylamid oder Polyacrlynitril. Ergänzend wird auf Römpp Lexikon Lacke und Druckfarben, Georg Thieme Verlag, 1998, Seiten 250 ff., »Füllstoffe«, verwiesen.

Es ist von Vorteil, Gemische von plättchenförmigen anorganischen Füllstoffen wie Talk oder Glimmer und nichtplättchenförmigen anorganischen Füllstoffen wie Kreide, Dolomit Calciumsulfate, oder Bariumsulfat zu verwenden, weil hierdurch die Viskosität und das Fließverhalten sehr gut eingestellt werden kann.

Beispiele geeigneter transparenter Füllstoffe sind solche auf der Basis von Siliziumdioxid, Aluminiumoxid oder Zirkoniumoxid, insbesondere aber Nanopartikel auf dieser Basis. Diese transparenten Füllstoffe können auch in den erfindungsgemäßen Klarlacken vorhanden sein.

Der thermisch oder thermisch und mit aktinischer Strahlung härtbare erfindungsgemäße Klarlack und Wasserbasislack können mindestens ein Vernetzungsmittel enthalten, das die für die thermische Vernetzung notwendigen komplementären reaktiven funktionellen Gruppen aufweist.

Beispiele geeigneter Vernetzungsmittel sind Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A oder EP 0 245 700 A 1 sowie in dem Artikel von B. Singh und Mitarbeiter "Carbamylmethylated Melamines, Novel Crosslinkers for the Coatings Indushy", in Advanced Organic Coatings Science and Technology Series, 1991, Band 13, Seiten 193 bis 207, beschrieben werden, Carboxylgruppen enthaltende Verbindungen oder Harze, wie sie beispielsweise in der Patentschrift DE 196 52 813 A 1 beschrieben werden, Epoxidgruppen enthaltende Verbindungen oder Harze, wie sie beispielsweise in den Patentschriften EP 0 299 420 A 1, DE 22 14 650 B 1, DE 27 49 576 B 1, US 4,091,048 A oder US 3,781,379 A beschrieben werden, blockierte Polyisocyanate, wie sie beispielsweise in den Patentschriften US 4,444,954 A 1, DE 196 17 086 A1, DE 196 31269 A1, EP 0 004 571 A 1 oder EP 0 582 051 A 1 beschrieben werden, und/oder Tris(alkoxycarbonylamino)-triazine, wie sie in den Patentschriften US 4,939,213 A, US 5,084,541 A, US 5,288,865 A oder EP 0 604 922 A beschrieben werden.

Die Anwendung von Vernetzungsmitteln kann entfallen, wenn die in den erfindungsgemäßen Klarlacken oder Wasserbasislacken enthaltenen erfindungsgemäßen modifizierten Copolymerisate selbstvernetzende Eigenschaften haben oder physikalisch vernetzen.

Die Dual-Cure-Beschichtungsstoffe, insbesondere die Dual-Cure-Klarlacke, enthalten mindestens einen Bestandteil, der mit aktinischer Strahlung härtbar ist. Beispiele geeigneter strahlenhärtbarer Bestandteile sind (meth)acrylfunktionelle (Meth)Acrylcopolymere, Polyctheracrylate, Polyesteracrylate, ungesättigte Polyester, Epoxyacrylate, Urethanacrylate, Aminoacrylate, Melaminacrylate, Silikonacrylate und die entsprechenden Methacrylate. Bevorzugt werden strahlenhärtbare Bestandteile eingesetzt, die frei von aromatischen Struktureinheiten sind. Besonders bevorzugt sind Urethan(meth)acrylate und/oder Polyester(meth)acrylate, insbesondere aliphatische Urethanacrylate. Weitere Beispiele mit aktinischer Strahlung härtbarer Bestandteile werden in der deutschen Patentanmeldung DE 198 35 206 A 1 beschrieben.

Zusätzlich zu den vorstehend beschriebenen Bestandteilen können der erfindungsgemäße Klarlack und der erfindungsgemäße Wasserbasislack übliche und bekannte Bindemittel, die von den erfindungsgemäßen modifizierten Copolymerisaten verschieden sind, und/oder Additive in wirksamen Mengen enthalten.

Beispiele üblicher und bekannter Bindemittel sind oligomere und polymere, thermisch härtbare, lineare und/oder verzweigte und/oder blockartig, kammartig und/oder statistisch aufgebaute Poly(meth)acrylate oder Acrylatcopolymerisate, insbesondere die in der Patentschrift DE 197 36 535 A 1 beschriebenen; Polyester, die in den Patentschriften DE 40 09 858 A 1 oder DE 44 37 535 A 1 beschriebenen, Alkyde, acrylierte Polyester, Polylactone; Polycarbonate; Polyether; Epoxidharz-Amin-Addukte; (Meth)Acrylatdiole; partiell verseifte Polyvinylester; Polyurethane und acrylierte Polyurethane, insbesondere die in den Patentanmeldungen EP 0 521 928 A 1, EP 0 522 420 A 1, EP 0 522 419 A 1, EP 0 730 613 A 1 oder DE 44 37 535 A 1 beschriebenen; oder Polyharnstoffe.

Beispiele geeigneter Additive sind thermisch härtbare Reaktiverdünner (vgl. die deutschen Patentanmeldungen DE 198 09 643 A 1, DE 198 40 605 A 1 oder DE 198 05 421 A 1) oder mit aktinischer Strahlung härtbare Reaktivverdünner (vgl. Römpp Lexikon Lacke und Druckfarben, Stuttgart, New York, 1998, Seiten 491), niedrig siedende organische Lösemittel und/oder hochsiedende organische Lösemittel ("lange Lösemittel"), UV-Absorber, Lichtschutzmittel, Radikalfänger, thermolabile radikalische Initiatoren, Photoinitiatoren, Katalysatoren für die Vernetzung, Entlüftungsmittel, Slipadditive, Polymerisationsinhibitoren, Entschäumer, Emulgatoren, Netzmittel, Haftvermittler, Verlaufmittel, filmbildende Hilfsmittel, rheologiesteuernde Additive oder Flammschutzmittel. Weitere Beispiele geeigneter Lackadditive werden in dem Lehrbuch »Lackadditive« von Johan Bieleman, Wiley-VCH, Weinheim, New York, 1998, beschrieben.

Die Herstellung des erfindungsgemäßen Wasserbasislacks oder Klarlacks weist keine Besonderheiten auf, sondern erfolgt in üblicher und bekannter Weise durch Vermischen der vorstehend beschriebenen Bestandteile in geeigneten Mischaggregaten wie Rührkessel, Dissolver, Rührwerksmühlen, statischen Mischern, Zahnkranz-Dispergatoren oder Extruder nach den für die Herstellung der jeweiligen Lacke geeigneten Verfahren.

Selbstverständlich können die vorstehend beschriebenen Pigmente, Füllstoffe, Vernetzungsmittel und sonstigen Additive sowie die vorstehend beschriebenen Methoden auch für die Herstellung der erfindungsgemäßen Klebstoffe und Dichtungsmassen angewandt werden.

Die erfindungsgemäßen Beschichtungsstoffen, Klebstoffe und Dichtungsmassen lassen sich mit üblichen und bekannten Applikationsmethoden auf grundierte und ungrundierte Substrate applizieren. Die applizierten Beschichtungsstoffen, Klebstoffe und Dichtungsmassen können in einfacher Weise mit Hilfe der üblichen und bekannten Verfahren und Vorrichtungen gehärtet werden.

Der erfindungsgemäße Wasserbasislack und der erfindungsgemäße Klarlack sind - jeder für sich in Kombination mit üblichen und bekannten Wasserbasislacken oder Klarlacken oder in Kombination miteinander - hervorragend für die Herstellung farb- und/oder effektgebender Mehrschichtlackierungen nach dem Naß-in-naß-Verfahren geeignet, bei dem eine Wasserbasislackschicht appliziert, getrocknet und mit einer Klarlackschicht überschichtet wird, wonach Wasserbasislackschicht um Klarlackschicht gemeinsam gehärtet werden. Bekanntermaßen wird dieses Verfahren bei der Kraftfahrzeugerstlackierung und - reparaturlackierung mit Vorteil angewandt.

Darüber hinaus kommen aber die erfindungsgemäßen Beschichtungsstoffe wegen ihrer besonders vorteilhaften Eigenschaften auch für die Beschichtung von Bauwerken im Innen- und Außenbereich, für die Lackierung von Möbeln, Fenstern oder Türen und die industrielle Lackierung, inklusive Coil Coating, Container Coating, der Imprägnierung oder Beschichtung elektrotechnischer Bauteile und der Beschichtung von weißer Ware, inklusive Haushaltsgeräte, Heizkessel und Radiatoren, in Betracht.

Die erfindungsgemäßen Beschichtungen weisen eine sehr gute Haftung auf den Substraten, eine sehr gute Zwischenschichthaflung, eine besonders glatte, von Störungen freie Oberfläche, einen hervorragenden optischen Gesamteindruck (Appearance), insbesondere was die Farb- und Effektgebung und den Glanz betrifft, eine hohe Chemikalienbeständigkeit, Witterungsstabilität, Säurestabilität, Wasserbeständigkeit und Kratzfestigkeit auf.

Die erfindungsgemäßen Klebschichten verbinden die unterschiedlichsten Substrate auf Dauer, haftfest miteinander und haben eine hohe chemische und mechanische Stabilität auch bei extremen Temperaturen und/oder Temperaturenschwankungen.

Desgleichen dichten die erfindungsgemäßen Dichtungen die Substrate auf Dauer ab, wobei sie eine hohe chemische und mechanische Stabilität auch bei extremen Temperaturen und/oder Temperaturschwankungen sogar i. V. m. der Einwirkung aggressiver Chemikalien aufweisen.

Demzufolge weisen die auf den vorstehend aufgeführten technologischen Gebieten üblicherweise angewandten grundierten oder ungrundierten Substrate, die mit mindestens einer erfindungsgemäßen Beschichtung beschichtet, mit mindestens einer erfindungsgemäßen Klebschicht verklebt und/oder mit mindestens einer erfindungsgemäßen Dichtung abgedichtet sind, bei einem besonders vorteilhaften anwendungstechnischen Eigenschaftsprofil eine besonders lange Gebrauchsdauer auf, was sie wirtschaftlich besonders attraktiv macht.

### Beispiele

### Herstellbeispiel 1

### Die Herstellung eines lösemittelfreien Methacrylatcopolymerisats (A1)

Für die Herstellung des Methacrylatcopolymerisats (A1) wurde ein 4-Liter-Edelstahlreaktor, ausgerüstet mit Rührer, Rückflußkühler, zwei Monomerzuläufen und einem Initiatorzulauf, verwendet. 50,98 Gewichtsteile deionisiertes Wasser wurden vorgelegt und unter Rühren auf 90°C aufgeheizt. Mit dem Start der Zuläufe wurde gleichzeitig begonnen. Innerhalb von vier Stunden wurden 9,88 Gewichtsteile Acrylsäure, 17,82 Gewichtsteile Methylmethacrylat 1,45 Gewichtsteile Diphenylethylen und 0,76 Gewichtsteile Mercaptoethanol aus dem ersten Zulaufgefäß gleichmäßig zudosiert. Aus dem zweiten Zulaufgefäß wurden 9,64 Gewichtsteile einer 25%igen Ammoniaklösung gleichmäßig zudosiert. Während 4,5 Stunden wurde der Initiatorzulauf, bestehend aus 5,1 Gewichtsteilen deionisiertem Wasser und 4,37 Gewichtsteilen Ammoninmperoxodisulfat, gleichmäßig zudosiert. Nach der Beendigung des Initiatorzulaufs wurde die Reaktionsmischung während drei Stunden bei 90°C nachpolymerisiert.

Die resultierende Dispersion des Methacrylatcopolymerisats (A) wies einen theoretischen Festkörpergehalt von 36,7 Gew.-% (gemessen: 34,9 Gew.-%; eine Stunde/130°C) auf.

### Herstellbeispiel 2

### Die Herstellung eines lösemittelfreien Methacrylatcopolymerisats (A2)

Für die Herstellung des Methacrylatcopolymerisats (A1) wurde ein 4-Liter-Edelstahlreaktor, ausgerüstet mit Rührer, Rückflußkühler, zwei Monomerzuläufen und einem Initiatorzulauf, verwendet. 52,53 Gewichtsteile deionisiertes Wasser wurden vorgelegt und unter Rühren auf 90°C aufgeheizt. Mit dem Start der Zuläufe wurde gleichzeitig begonnen. Innerhalb von vier Stunden wurden 10,18 Gewichtsteile Acrylsäure, 17,04 Gewichtsteile Methylmethacrylat 1,5 Gewichtsteile Diphenylethylen und 1,32 Gewichtsteile 2-Hydroxyethylmethacrylat aus dem ersten Zulaufgefäß gleichmäßig zudosiert. Aus dem zweiten Zulaufgefäß wurden 9,93 Gewichtsteile einer 25%igen Ammoniaklösung gleichmäßig zudosiert. Während 4,5 Stunden wurde der Initiatorzulauf, bestehend aus 5,25 Gewichtsteilen deionisiertem Wasser und 2,25 Gewichtsteilen Ammoniumperoxodisulfat, gleichmäßig zudosiert. Nach der Beendigung des Initiatorzulaufs wurde die Reaktionsmischung während drei Stunden bei 90°C nachpolymerisiert.

Die resultierende Dispersion des Methacrylatcopolymerisats (A) wies einen theoretischen Festkörpergehalt von 34,9 Gew.-% (gemessen: 33,5 Gew.-%; eine Stunde/130°C) und eine Hydroxylzahl von 282 mg KOH/g auf.

### Herstellbeispiel 3

### Die Herstellung eines Polyurethanpräpolymeren (B)

Für die Herstellung des Polyurethanpräpolymeren wurde ein 4 Liter-Edelstahlreaktor mit Rührer und Rückflußkühler verwendet. Es wurden 55,6 Gewichtsteile eines Polyestersdiols auf der Basis von Dimerfettsäuren, Terephthalsäure und Neopentylglykol (Festkörper: 73 Gew.-%), 0,58 Gewichtsteile Neopentylglykol, 5,8 Gewichtsteile Dimethylolpropionsäure und 23,02 Gewichtsteile Tetramethylxylylidendiisocyanat (TMXDI®) und 15,0 Gewichtsteile Methylisobutylketon eingewogen und unter Rühren auf 90°C erhitzt. Nachdem der Gehalt an freien Isocyanatgruppen konstant war, wurde die Reaktion abgebrochen. Das resultierende Polyurethanpräpolymer (B) wies einen theoretischen Festkörpergehalt von 70 Gew.-% auf.

### Beispiel 1

### Die Herstellung eines erfindungsgemäßen modifizierten Methacrylatcopolymerisats 1

Die Herstellung des erfindungsgemäßen modifizierten Methacrylatcopolymerisats 1 erfolgte in einem 4-Liter-Edelstahlreaktor, ausgerüstet mit Rührer, Rückflußkühler und drei Zulaufgefäßen.

Es wurden 36,31 Gewichtsteile des Polyurethanpräpolymeren (B) des Herstellbeispiels 3 eingewogen und unter Rühren auf 82°C erhitzt. Bei dieser Temperaturen wurden während 15 Minuten 1,37 Gewichtsteile Triethylamin gleichmäßig zudosiert. Das resultierende neutralisierte Polyurethanpräpolymer (B) wurde während 30 Minuten nachgerührt. Anschließend wurden 3,95 Gewichtsteile der wäßrigen Dispersion des Methacrylatcopolymerisats (A1) des Herstellbeispiels 1 hinzugegeben. Die resultierende Mischung wurde solange gerührt, bis keine freien Isocyanatgruppen mehr nachweisbar waren. Innerhalb einer Stunde wurde die Reaktionsmischung bei 82°C mit 37,92 Gewichtsteilen deionisiertem Wasser versetzt. Die resultierende Dispersion wurde während einer Stunde homogenisiert. Anschließend wurden innerhalb von vier Stunden 5,02 Gewichtsteile Hydroxypropylmethacrylat, 1,43 Gewichtsteile n-Butylacrylat, 2,87 Gewichtsteile Styrol, 2,87 Gewichtsteile tert.-Butylcyclohexylacrylat und 2,15 Gewichtsteile Methylmethacrylat gleichmäßig zudosiert. Nach der Beendigung des Zulaufs wurde während 5 Stunden nachpolymerisiert. Anschließend wurde die Dispersion des erfindungsgemäßen modifizierten Methacrylatcopolymerisats 1 mit 6,11 Gewichtsteilen deionisiertem Wasser auf einen Festkörpergehalt von 43 Gew.-% eingestellt. Die Dispersion 1 wies, bezogen auf den theoretischen Festkörpergehalt, eine Säurezahl von 43,3 mg KOH/g und einen pH-Wert von 6,5 auf.

Die erfindungsgemäße Dispersion 1 war hervorragend für die Herstellung von Beschichtungsstoffen, Klebstoffen und Dichtungsmassen, insbesondere von Beschichtungsstoffen wie Klarlacken und Wasserbasislacken, geeignet. Außerdem eignete sie sich hervorragend für die Herstellung von Pigmentpasten mit einem besonders hohen Pigment-Bindemittel-Verhältnis.

### Beispiel 2

### Die Herstellung eines erfindungsgemäßen modifizierten Methacrylatcopolymerisats 2

Die Herstellung des erfindungsgemäßen modifizierten Methacrylatcopolymerisats 2 erfolgte in einem 4-Liter-Edelstahlreaktor, ausgerüstet mit Rührer, Rückflußkühler und drei Zulaufgefäßen.

Es wurden 36,14 Gewichtsteile des Polyurethanpräpolymeren (B) des Herstellbeispiels 3 eingewogen und unter Rühren auf 82°C erhitzt. Bei dieser Temperaturen wurde während 15 Minuten 1,38 Gewichtsteile Triethylamin gleichmäßig zudosiert. Das resultierende neutralisierte Polyurethanpräpolymer (B) wurden während 30 Minuten nachgerührt. Anschließend wurden 3,344 Gewichtsteile der wäßrigen Dispersion des Methacrylatcopolymerisats (A2) des Herstellbeispiels 2 hinzugegeben. Die resultierende Mischung wurde solange gerührt, bis keine freien Isocyanatgruppen mehr nachweisbar waren. Innerhalb einer Stunde wurde die Reaktionsmischung bei 82°C mit 38,6 Gewichtsteilen deionisiertem Wasser versetzt. Die resultierende Dispersion wurde während einer Stunde homogenisiert. Anschließend wurden innerhalb von vier Stunden 5,0 Gewichtsteile Hydroxypropylmethacrylat, 1,44 Gewichtsteile n-Butylacrylat, 2,88 Gewichtsteile Styrol, 2,88 Gewichtsteile tert.-Butylcyclohexylacrylat und 2,16 Gewichtsteile Methylmethacrylat gleichmäßig zudosiert. Nach der Beendigung des Zulaufs wurde während 5 Stunden nachpolymerisiert. Anschließend wurde die Dispersion des erfindungsgemäßen modifizierten Methacrylatcopolymerisats 1 mit 6,08 Gewichtsteilen deionisiertem Wasser auf einen Festkörpergehalt von 43 Gew.-% eingestellt. Die Dispersion 2 wies, bezogen auf den theoretischen Festkörpergehalt, eine Säurezahl von 33 mg KOH/g und einen pH-Wert von 6,8 auf.

Die erfindungsgemäße Dispersion 2 war hervorragend für die Herstellung von Beschichtungsstoffen, Klebstoffen und Dichtungsmassen, insbesondere von Beschichtungsstoffen wie Klarlacken und Wasserbasislacken geeignet. Außerdem eignete sie sich hervorragend für die Herstellung von Pigmentpasten mit einem besonders hohen Pigment-Bindemittel-Verhältnis.

## Patentansprüche

1. Mit Polyurethanen modifizierte Copolymerisate, herstellbar, indem man mindestens ein olefinisch ungesättigtes Monomer (a) in einem wäßrigen oder nicht wäßrigen Medium, enthaltend mindestens ein Umsetzungsprodukt (A/B) aus
(A) mindestens einem Copolymerisat mit im statistischen Mittel mindestens 0,1 isocyanatreaktiven funktionellen Gruppen im Molekül, herstellbar durch radikalische Copolymerisation von zumindest
(a) mindestens einem olefinisch ungesättigten Monomer und
(b) mindestens einem vom olefinisch ungesättigten Monomer (a1) verschiedenen olefinisch ungesättigtes Monomer der allgemeinen Formel I
**R¹R²C=CR³R⁴** **(I),**
worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl-Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
in einem wäßrigen Medium oder nichtwäßrigen Medium; und
(B) mindestens einem Polyisocyanat;
radikalisch (co)polymerisiert.

2. Mit Polyurethanen modifizierte Copolymerisate nach Anspruch 1, **dadurch gekennzeichnet, daß** die Copolymerisate (A) (Meth)Acrylatcopolymerisate sind.

3. Mit Polyurethanen modifizierte Copolymerisate nach Anspruch 1 oder 2, **dadurch gekennzeichnet, daß** mindestens eines der Monomere (a), die mit den Monomeren (b) copolymerisiert werden, hydrophil ist.

4. Mit Polyurethanen modifizierte Copolymerisate nach einem der Ansprüche 1 bis 3, **dadurch gekennzeichnet, daß** mindestens eines der Monomeren (a), die in der Gegenwart mindestens eines Umsetzungsprodukts (A/B) (co)polymerisiert werden, hydrophob ist.

5. Mit Polyurethanen modifizierte Copolymerisate nach einem der Ansprüche 1 bis 4, **dadurch gekennzeichnet, daß** die Monomeren (a), die in der Gegenwart mindestens eines Umsetzungsprodukts (A/B) polymerisiert werden, in der Abwesenheit eines radikalischen Initiators (co)polymerisiert werden.

6. Mit Polyurethanen modifizierte Copolymerisate nach einem der Ansprüche 1 bis 5, **dadurch gekennzeichnet, daß** die isocyanatreaktiven funktionellen Gruppen über mindestens ein olefinisch ungesättigtes Monomer (a2), das im statistischen Mittel mindestens eine isocyanatreaktive funktionelle Gruppe im Molekül enthält, und/oder über mindestens eine die radikalische Copolymerisation regelnde Verbindung (c), die im statistischen Mittel mindestens eine Thiolgruppe und mindestens eine weitere, von der Thiolgruppe verschiedene, isocyanatreaktive funktionelle Gruppe im Molekül enthält, in die Copolymerisate (A) eingeführt werden.

7. Mit Polyurethanen modifizierte Copolymerisate nach einem der Ansprüche 1 bis 6, **dadurch gekennzeichnet, daß** die Polyisocanate (B) aus der Gruppe bestehend aus acyclischen aliphatischen, cycloaliphatischen, und aromatischen Diisocyanaten, Oligomeren dieser Diisocyanate sowie Polyurethanpräpolymeren mit endständigen freien Isocyanatgruppen, ausgewählt werden.

8. Mit Polyurethanen modifizierte Copolymerisate nach Anspruch 7, **dadurch gekennzeichnet, daß** die Oligomeren der Diisocyanate (B) aus der Gruppe bestehend aus Isocyanurat-, Biuret-, Allophanat-, Iminooxadiazindion-, Urethan-, Harnstoff-, Carbodiimid- und Uretdiongruppen enthaltenden Oligomeren, ausgewählt werden.

9. Mit Polyurethanen modifizierte Copolymerisate nach Anspruch 8, **dadurch gekennzeichnet, daß** die Polyurethanpräpolymeren (B) herstellbar sind, indem man zumindest mindestens ein organisches Diisocyanat mit mindestens einer Verbindung mit im statistischen Mittel mindestens zwei isocyanatreaktiven funktionellen Gruppen im Molekül und mindestens einer Verbindung mit im statistischen Mittel mindestens zwei isocyanatreaktiven von funktionellen Gruppen und mindestens einer hydrophilen Gruppe im Molekül umsetzt, wobei das Molverhältnis von Isocyanatgruppen zu isocyanatreaktiven funktionellen Gruppen > 1.

10. Mit Polyurethanen modifizierte Copolymerisate nach einem der Ansprüche 1 bis 9, **dadurch gekennzeichnet, daß** die isocyanatreaktiven funktionellen Gruppen aus der Gruppe, bestehend aus Thiol-, Hydroxylsowie primären und sekundären Aminogruppen, ausgewählt werden.

11. Mit Polyurethanen modifizierte Copolymerisate nach einen Ansprüche 1 bis 10 , **dadurch gekennzeichnet, daß** es sich bei den Arylresten R¹, R², R³ und/oder R⁴ der Monomeren (b) um Phenyl- oder Naphthylreste handelt.

12. Mit Polyurethanen modifizierte Copolymerisate nach Anspruch 11, **dadurch gekennzeichnet, daß** es sich um Phenylreste handelt.

13. Mit Polyurethanen modifizierte Copolymerisate nach einem der Ansprüche 1 bis 12, **dadurch gekennzeichnet, daß** die Substituenten in den Resten R¹, R², R³ und/oder R⁴ der Monomeren (b) aus der Gruppe, bestehend aus elektronenziehenden oder elektronenschiebenden Atomen oder organischen Resten, ausgewählt werden.

14. Mit Polyurethanen modifizierte Copolymerisate nach Anspruch 13, **dadurch gekennzeichnet, daß** die Substituenten aus der Gruppe, bestehend aus Halogenatomen, Nitril-, Nitro-, partiell oder vollständig halogenierten Alkyl-, Cycloalkyl-, Alkylcycloalkyl-, Cycloalkylalkyl-, Aryl-, Alkylaryl-, Cycloalkylaryl- Arylalkyl- und Arylcycloalkylreste; Aryloxy-, Alkyloxy- und Cycloalkyloxyresten; Arylthio-, Alkylthio- und Cycloalkylthioresten und primären, sekundären und/oder tertiären Amionogruppen, ausgewählt werden.

15. Verfahren zur Herstellung von mit Polyurethanen modifizierten Copolymerisaten nach einem der Ansprüche 1 bis 14, **dadurch gekennzeichnet, daß** man in einem wäßrigen Medium oder einem nichtwäßrigen Medium
(I) mindestens ein Copolymerisat (A) mit im statistischen Mittel mindestens 0,1 isocyanatreaktiven funktionellen Gruppen im Molekül durch radikalische Copolymerisation von zumindest
(a) mindestens einem olefinisch ungesättigten Monomer und
(b) mindestens einem vom olefinisch ungesättigten Monomer (a1) verschiedenen olefinisch ungesättigtes Monomer der allgemeinen Formel I
**R¹R²C=CR³R⁴** **(I),**
worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl-Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
herstellt,
(II) das resultierende Copolymerisat (A) mit mindestens einem Polyisocyanat (B) umsetzt, wodurch das Polyurethan (A/B) resultiert, und
(III) mindestens ein weiteres olefinisch ungesättigtes Monomer (a) in der Gegenwart des Polyurethans (A/B) (co)polymerisiert.

16. Verwendung der mit Polyurethanen modifizierten Copolymerisate gemäß einem der Ansprüche 1 bis 14 oder der nach dem Verfahren gemäß Anspruch 15 hergestellten, mit Polyurethanen modifizierten Copolymerisate als Beschichtungsstoffe, Klebstoffe und Dichtungsmassen oder zur Herstellung von Beschichtungsstoffen, Klebstoffen und Dichtungsmassen.

17. Verwendung nach Anspruch 16, **dadurch gekennzeichnet, daß** die Beschichtungsstoffe, Klebstoffe oder Dichtungsmassen physikalisch, thermisch oder thermisch und mit aktinischer Strahlung härtbar sind.

18. Verwendung nach Anspruch 17, **dadurch gekennzeichnet, daß** die thermisch oder thermisch und mit aktinischer Strahlung härtbaren Beschichtungsstoffe, Klebstoffe oder Dichtungsmassen Ein- oder Mehrkomponentensysteme sind.

19. Verwendung nach einem der Ansprüche 16 bis 18, **dadurch gekennzeichnet, daß** die Beschichtungsstoffe, Klebstoffe oder Dichtungsmassen pigmentiert oder nicht pigmentiert sind.

20. Verwendung nach einem der Ansprüche 16 bis 19, **dadurch gekennzeichnet, daß** die Beschichtungsstoffe, Klebstoffe oder Dichtungsmassen auf den Gebieten der Kraftfahrzeugserienlackierung, der Krafthrzeugreparaturlackierung, der Beschichtung von Bauwerken im Innen- und Außenbereich, der Lackierung von Möbeln, Fenstern oder Türen und der industriellen Lackierung, inklusive Coil Coating, Container Coating, der Imprägnierung oder Beschichtung elektrotechnischer Bauteile und der Beschichtung von weißer Ware, inklusive Haushaltsgeräte, Heizkessel und Radiatoren, verwendet werden.

## Claims

1. Polyurethane-modified addition copolymer preparable by free-radically (co)polymerizing at least one olefinically unsaturated monomer (a) in an aqueous or nonaqueous medium comprising the reaction product (A/B) of
(A) at least one addition copolymer containing on average per molecule at least 0.1 isocyanate-reactive functional groups and preparable by free-radical copolymerization of at least
a) at least one olefinically unsaturated monomer and
b) at least one olefinically unsaturated monomer different than the olefinically unsaturated monomer (a1) and of the general formula I
**R¹R²C=CR³R⁴** (I)
in which the radicals R¹, R², R³, and R⁴ each independently of one another are hydrogen atoms or substituted or unsubstituted alkyl, cycloalkyl, alkylcycloalkyl, cycloalkylalkyl, aryl, alkylaryl, cycloalkylaryl, arylalkyl or arylcycloalkyl radicals, with the proviso that at least two of the variables R¹, R², R³, and R⁴ are substituted or unsubstituted aryl, arylalkyl or arylcycloalkyl radicals, especially substituted or unsubstituted aryl radicals;
in an aqueous medium or nonaqueous medium; and
(B) at least one polyisocyanate.

2. Copolymer according to Claim 1, **characterized in that** the copolymer (A) is a (meth)acrylate copolymer.

3. Copolymer according to Claim 1 or 2, **characterized in that** at least one of the monomers (a) which are copolymerized with monomers (b) is hydrophilic.

4. Copolymer according to any of Claims 1 to 3, **characterized in that** at least one of the monomers (a) which are (co)polymerized in the presence of at least one reaction product (A/B) is hydrophobic.

5. Copolymer according to any of Claims 1 to 4, **characterized in that** the monomers (a) which are polymerized in the presence of at least one reaction product (A/B) are (co)polymerized in the absence of a free-radical initiator.

6. Copolymer according to any of Claims 1 to 5, **characterized in that** the isocyanate-reactive functional groups are introduced into the copolymers (A) by way of at least one olefinically unsaturated monomer (a2) containing on average per molecule at least one isocyanate-reactive functional group, and/or by way of at least one compound (c) which regulates the free-radical copolymerization and contains on average per molecule at least one thiol group and at least one further isocyanate-reactive functional group different than the thiol group.

7. Copolymer according to any of Claims 1 to 6, **characterized in that** the polyisocyanates (B) are selected from the group consisting of acyclic aliphatic, cycloaliphatic, and aromatic diisocyanates, oligomers of these diisocyanates, and polyurethane prepolymers containing terminal free isocyanate groups.

8. Copolymer according to Claim 7, **characterized in that** the oligomers of the diisocyanates (B) are selected from the group consisting of oligomers containing isocyanurate, biuret, allophanate, iminooxadiazinedione, urethane, urea, carbodiimide and uretdione groups.

9. Copolymer according to Claim 8, **characterized in that** the polyurethane prepolymers (B) are preparable by at least reacting at least one organic diisocyanate with at least one compound containing on average per molecule at least two isocyanate-reactive functional groups and at least one compound containing on average per molecule at least two isocyanate-reactive functional groups and at least one hydrophilic group, the molar ratio of isocyanate groups to isocyanate-reactive functional groups being > 1.

10. Copolymer according to any of Claims 1 to 9, **characterized in that** the isocyanate-reactive functional groups are selected from the group consisting of thiol, hydroxyl, and primary and secondary amino groups.

11. Copolymer according to any of Claims 1 to 10, **characterized in that** the aryl radicals R¹, R², R³ and/or R⁴ of the monomers (b) are phenyl or naphthyl radicals.

12. Copolymer according to Claim 11, **characterized in that** said radicals are phenyl radicals.

13. Copolymer according to any of Claims 1 to 12, **characterized in that** the substituents in the radicals R¹, R², R³ and/or R⁴ of the monomers (b) are selected from the group consisting of electron withdrawing or electron donating atoms and organic radicals.

14. Copolymer according to Claim 13, **characterized in that** the substituents are selected from the group consisting of halogen atoms, nitrile, nitro, partially or fully halogenated alkyl, cycloalkyl, alkylcycloalkyl, cycloalkylalkyl, aryl, alkylaryl, cycloalkylaryl, arylalkyl, and arylcycloalkyl radicals; aryloxy, alkyloxy, and cycloalkyloxy radicals; arylthio, alkylthio, and cycloalkylthio radicals, and primary, secondary and/or tertiary amino groups.

15. Process for preparing a polyurethane-modified addition copolymer according to any of Claims 1 to 14, **characterized in that** in an aqueous or nonaqueous medium
(I) at least one addition copolymer (A) containing on average per molecule at least 0.1 isocyanate-reactive functional groups by free-radical copolymerization of at least
a) at least one olefinically unsaturated monomer and
b) at least one olefinically unsaturated monomer (a1) different than the olefinically unsaturated monomer (a) and of the general formula I
R¹R²C=CR³R⁴ (I)
in which the radicals R¹, R², R³, and R⁴ each independently of one another are hydrogen atoms or substituted or unsubstituted alkyl, cycloalkyl, alkylcycloalkyl, cycloalkylalkyl, aryl, alkylaryl, cycloalkylaryl, arylalkyl or arylcycloalkyl radicals, with the proviso that at least two of the variables R¹, R², R³, and R⁴ are substituted or unsubstituted aryl, arylalkyl or arylcycloalkyl radicals, especially substituted or unsubstituted aryl radicals is prepared;
(II) the resulting copolymer (A) is reacted with at least one polyisocyanate (B) to give the polyurethane (A/B), and
(III) at least one further olefinically unsaturated monomer (a) is copolymerized in the presence of the polyurethane (A/B).

16. Use of a polyurethane-modified addition copolymer according to any of Claims 1 to 14, or of a polyurethane-modified addition copolymer prepared by the process according to Claim 15 as a coating material, adhesive or sealing compound or to prepare a coating material, adhesive or sealing compound.

17. Use according to Claim 16, **characterized in that** the coating material, adhesive or sealing compound is curable physically, thermally, or thermally and with actinic radiation.

18. Use according to Claim 17, **characterized in that** the coating material, adhesive or sealing compound curable thermally or thermally and with actinic radiation is a one-component or multicomponent system.

19. Use according to any of Claims 16 to 18, **characterized in that** the coating material, adhesive or sealing compound is pigmented or unpigmented.

20. Use according to any of Claims 16 to 19, **characterized in that** the coating material, adhesive or sealing compound is used in the fields of automotive OEM finishing and automotive refinish, to coat buildings inside and outside, to coat furniture, windows or doors, or for industrial coating, including coil coating, container coating, the impregnation or coating of electrical components, and the coating of white goods, including domestic appliances, boilers, and radiators.

## Revendications

1. Copolymères modifiés par des polyuréthanes, pouvant être préparés en ce qu'on (co)polymérise par voie radicalaire au moins un monomère (a) oléfiniquement insaturé dans un milieu aqueux ou non aqueux, contenant au moins un produit de transformation (A/B) de
(A) au moins un copolymère présentant, en moyenne statistique, au moins 0,1 groupe fonctionnel réactif avec isocyanate dans la molécule, pouvant être préparé par copolymérisation radiculaire d'au moins
(a) au moins un monomère oléfiniquement insaturé et
(b) au moins un monomère oléfiniquement insaturé, différent du monomère (a1) oléfiniquement insaturé, de formule générale I
R¹R²C = CR³R⁴ (I),
dans laquelle les radicaux R¹, R², R³ et R⁴ représentent, à chaque fois indépendamment l'un de l'autre, des atomes d'hydrogène ou des radicaux alkyle, cycloalkyle, alkylcycloalkyle, cycloalkylalkyle, aryle, alkylaryle, cycloalkylaryle, arylalkyle ou arylcycloalkyle, substitués ou non substitués, à condition qu'au moins deux des variables R¹, R², R³ et R⁴ représentent des radicaux aryle, arylalkyle ou arylcycloalkyle, substitués ou non substitués, en particulier des radicaux aryle substitués ou non substitués. dans un milieu aqueux ou non aqueux ; et
(B) au moins un polyisocyanate.

2. Copolymères modifiés par des polyuréthanes selon la revendication 1, **caractérisés en ce que** les copolymères (A) sont des copolymères de (méth)acrylate.

3. Copolymères modifiés par des polyuréthanes selon la revendication 1 ou 2, **caractérisés en ce qu'**au moins un des monomères (a), qui sont copolymérisés avec les monomères (b), est hydrophile.

4. Copolymères modifiés par des polyuréthanes selon l'une quelconque des revendications 1 à 3, **caractérisés en ce qu'**au moins un des monomères (a), qui sont (co)polymérisés en présence d'au moins un produit de transformation (A/B), est hydrophobe.

5. Copolymères modifiés par des polyuréthanes selon l'une quelconque des revendications 1 à 4, **caractérisés en ce que** les monomères (a), qui sont polymérisés en présence d'au moins un produit de transformation (A/B) sont (co)polymérisés en l'absence d'un initiateur radicalaire.

6. Copolymères modifiés par des polyuréthanes selon l'une quelconque des revendications 1 à 5, **caractérisés en ce que** les groupes fonctionnels réactifs avec isocyanate sont introduits dans les copolymères (A) via au moins un monomère (a2) oléfiniquement insaturé qui contient en moyenne statistique au moins un groupe fonctionnel réactif avec isocyanate dans la molécule et/ou via au moins un composé (c) régulant la copolymérisation radicalaire, qui contient en moyenne statistique au moins un groupe thiol et au moins un autre groupe fonctionnel réactif avec isocyanate différent du groupe thiol dans la molécule.

7. Copolymères modifiés avec des polyuréthanes selon l'une quelconque des revendications 1 à 6, **caractérisés en ce que** les polyisocyanates (B) sont choisis dans le groupe constitué par les diisocyanates aliphatiques acycliques, cycloaliphatiques et aromatiques, les oligomères de ces diisocyanates ainsi que les prépolymères de polyuréthane avec des groupes isocyanate libres en position terminale.

8. Copolymères modifiés par des polyuréthanes selon la revendication 7, **caractérisés en ce que** les oligomères des diisocyanates (B) sont choisis dans le groupe constitué par les oligomères contenant des groupes isocyanurate, biuret, allophanate, iminooxadiazinedione, uréthane, urée, carbodiimide et uretdione.

9. Copolymères modifiés par des polyuréthanes selon la revendication 8, **caractérisés en ce que** les prépolymères de polyuréthane (B) peuvent être préparés en ce qu'on transforme au moins au moins un diisocyanate organique avec au moins un composé présentant en moyenne statistique au moins deux groupes fonctionnels réactifs avec isocyanate dans la molécule et au moins un composé présentant en moyenne statistique au moins deux groupes fonctionnels réactifs avec isocyanate et au moins un groupe hydrophile dans la molécule, le rapport molaire des groupes isocyanate à groupes fonctionnels réactifs avec isocyanate > 1.

10. Copolymères modifiés par des polyuréthanes selon l'une quelconque des revendications 1 à 9, **caractérisés en ce que** les groupes fonctionnels réactifs avec isocyanate sont choisis dans le groupe constitué par les groupes thiol, hydroxyle ainsi qu'amino primaire et secondaire.

11. Copolymères modifiés par des polyuréthanes selon l'une quelconque des revendications 1 à 10, **caractérisés en ce qu'**il s'agit, pour les radicaux aryle R¹, R², R³ et/ou R⁴ des monomères (b) de radicaux phényle ou naphtyle.

12. Copolymères modifiés par des polyuréthanes selon la revendication 11, **caractérisés en ce qu'**il s'agit de radicaux phényle.

13. Copolymères modifiés par des polyuréthanes selon l'une quelconque des revendications 1 à 12, **caractérisés en ce que** les substituants dans les radicaux R¹, R², R³ et/ou R⁴ des monomères (b) sont choisis dans le groupe constitué par les atomes ou les radicaux organiques attracteurs d'électrons ou déplaçant les électrons.

14. Copolymères modifiés par des polyuréthanes selon la revendication 13, **caractérisés en ce que** les substituants sont choisis dans le groupe constitué par les atomes d'halogène, les radicaux nitrile, nitro, les radicaux alkyle, cycloalkyle, alkylcycloalkyle, cycloalkylalkyle, aryle, alkylaryle, cycloalkylaryle, arylalkyle et arylcycloalkyle partiellement ou totalement halogénés ; les radicaux aryloxy, alkyloxy et cycloalkyloxy ; les radicaux arylthio, alkylthio et cycloalkylthio et les radicaux amino primaire, secondaire et/ou tertiaire.

15. Procédé pour la préparation de copolymères modifiés par des polyuréthanes selon l'une quelconque des revendications 1 à 14, **caractérisé en ce qu'**on prépare dans un milieu aqueux ou non aqueux
(I) au moins un copolymère (A) présentant, en moyenne statistique, au moins 0,1 groupe fonctionnel réactif avec isocyanate dans la molécule par copolymérisation radicalaire d'au moins
(a) au moins un monomère oléfiniquement insaturé et
(b) au moins un monomère oléfiniquement insaturé, différent du monomère (a1) oléfiniquement insaturé, de formule générale I
R¹R²C = CR³R⁴ (I),
dans laquelle les radicaux R¹, R², R³ et R⁴ représentent, à chaque fois indépendamment l'un de l'autre, des atomes d'hydrogène ou des radicaux alkyle, cycloalkyle, alkylcycloalkyle, cycloalkylalkyle, aryle, alkylaryle, cycloalkylaryle, arylalkyle ou arylcycloalkyle, substitués ou non substitués, à condition qu'au moins deux des variables R¹, R², R³ et R⁴ représentent des radicaux aryle, arylalkyle ou arylcycloalkyle, substitués ou non substitués, en particulier des radicaux aryle substitués ou non substitués ;
(II) on transforme le copolymère (A) obtenu avec au moins un polyisocyanate (B), ce qui permet d'obtenir le polyuréthane (A/B), et
(III) on (co)polymérise au moins un autre monomère oléfiniquement insaturé (a) en présence du polyuréthane (A/B).

16. Utilisation des copolymères modifiés par des polyuréthanes selon l'une quelconque des revendications 1 à 14 ou des copolymères modifiés par des polyuréthanes préparés selon le procédé selon la revendication 15 comme revêtements, adhésifs et masses d'étanchéité ou pour la préparation de revêtements, d'adhésifs et de masses d'étanchéité.

17. Utilisation selon la revendication 16, **caractérisée en ce que** les revêtements, les adhésifs ou les masses d'étanchéité sont durcissables par voie physique, thermique ou par voie thermique et avec un rayonnement actinique.

18. Utilisation selon la revendication 17, **caractérisée en ce que** les revêtements, les adhésifs ou les masses d'étanchéité durcissables par voie thermique ou par voie thermique et avec un rayonnement actinique sont des systèmes à un ou plusieurs composants.

19. Utilisation selon l'une quelconque des revendications 16 à 18, **caractérisée en ce que** les revêtements, les adhésifs ou les masses d'étanchéité sont pigmentés ou non pigmentés.

20. Utilisation selon l'une quelconque des revendications 16 à 19, **caractérisée en ce que** les revêtements, les adhésifs ou les masses d'étanchéité sont utilisés dans les domaines du laquage en série de véhicules, du laquage de réparation de véhicules, du revêtement de constructions à l'intérieur et à l'extérieur, du laquage de meubles, de fenêtres ou de portes et du laquage industriel, comprenant le revêtement de bobines, de conteneurs, l'imprégnation et le revêtement de pièces électrotechniques ou le revêtement d'articles blancs, y compris les appareils domestiques, les chaudières et les radiateurs.
